# EUROPEAN PATENT APPLICATION

(11) **EP 4 851 497 A1**
(43) Date of publication of application: **09.12.2026**
(21) Application number: 25749176.1
(22) Date of filing: 31.01.2025
(51) Int. Cl.: F16H 49/00

(54) **POWER TRANSMISSION APPARATUS**

(30) Priority: 31.01.2024 JP 2024013793
(71) Applicant: Minebea Mitsumi Inc., Kitasaku-gun, Nagano 3890293 (JP)
(72) Inventor: AIDA, Satoshi, Kitasaku-gun, Nagano 389-0293 (JP); KAMIYA, Kohei, Kitasaku-gun, Nagano 389-0293 (JP); KAKURA, Shinnosuke, Kitasaku-gun, Nagano 389-0293 (JP); TOIDA, Shogo, Kitasaku-gun, Nagano 389-0293 (JP)
(74) Representative: Winter, Brandl - Partnerschaft mbB
(86) International application number: PCT/JP2025/003322
(87) International publication number: WO 2025/164799

(57) **Abstract**

A power transmission device (100) includes a magnetic gear device (1) and a mechanical gear device (3) connected to the magnetic gear device (1). The magnetic gear device (1) is a harmonic type magnetic gear device.

## Description

### Technical Field

The present invention relates to a power transmission device.

### Background Art

Conventionally, there is known a magnetic gear device including a ring-shaped first magnet and a ring-shaped second magnet disposed such that a part of an outer peripheral surface of the first magnet and a part of an outer peripheral surface of the second magnet overlap each other in an axial direction (for example, see Patent Document 1).

### Citation List

### Patent Literature

Patent Document 1: JP 2011-196451 A

### Summary of Invention

### Technical Problem

However, the technique described in Patent Document 1 has room for improvement in increasing torque density.

The present invention has been made in view of the above, and provides a power transmission device capable of increasing torque density.

### Solution to Problem

In order to solve the above-described problem and achieve the object, the present invention provides a power transmission device including a magnetic gear device and a mechanical gear device connected to the magnetic gear device, in which the magnetic gear device is a harmonic type magnetic gear device.

With one aspect of the power transmission device according to the present invention, it is possible to increase torque density.

### Brief Description of Drawings

FIG. 1 is a plan view of a power transmission device including a magnetic gear device according to a first embodiment.
FIG. 2-1 is a cross-sectional view taken along an arrow A-A in FIG. 1.
FIG. 2-2 is a perspective view illustrating an electronic lock as an example of the power transmission device.
FIG. 3 is a perspective view of the magnetic gear device illustrated in FIG. 1.
FIG. 4 is a perspective view of a magnetic gear device according to a first modified example of the first embodiment.
FIG. 5 is a perspective view of a magnetic gear device according to a second modified example of the first embodiment.
FIG. 6 is a cross-sectional view of a power transmission device including a magnetic gear device according to a second embodiment.
FIG. 7-1 is a perspective view of the magnetic gear device illustrated in FIG. 6.
FIG. 7-2 is a plan view of a second magnetic gear mechanism included in the magnetic gear device illustrated in FIG. 6.
FIG. 8 is a cross-sectional view of a power transmission device including a magnetic gear device according to a first modified example of the second embodiment.
FIG. 9-1 is a perspective view of the magnetic gear device illustrated in FIG. 8.
FIG. 9-2 is a cross-sectional view of the magnetic gear device illustrated in FIG. 8, illustrating the other side in the axial direction.
FIG. 10-1 is a plan view of a power transmission device including a magnetic gear device according to a third embodiment.
FIG. 10-2 is a perspective view of the magnetic gear device illustrated in FIG. 10-1.
FIG. 11-1 is a plan view of a power transmission device including a magnetic gear device according to a first modified example of the second embodiment.
FIG. 11-2 is a perspective view of the magnetic gear device illustrated in FIG. 11-1.
FIG. 12 is a plan view of a power transmission device according to a fourth embodiment.
FIG. 13 is a cross-sectional view of a power transmission device according to a fifth embodiment.
FIG. 14 is a cross-sectional view of a power transmission device according to a sixth embodiment.
FIG. 15 is a cross-sectional view of a power transmission device according to a seventh embodiment.
FIG. 16 is a front view of an intermediate transmission mechanism included in the power transmission device illustrated in FIG. 15.
FIG. 17 is a cross-sectional view of a power transmission device according to a first modified example of the seventh embodiment.
FIG. 18 is a cross-sectional view of a power transmission device according to a second modified example of the seventh embodiment.
FIG. 19 is a cross-sectional view of a power transmission device according to a third modified example of the seventh embodiment.
FIG. 20 is a front view of an intermediate transmission mechanism included in the power transmission device illustrated in FIG. 19.

Hereinafter, power transmission devices according to embodiments will be described in detail with reference to the drawings. Note that the dimensional relationship between elements and the ratio of each element in the drawings may differ from reality. Some of the parts may be different in dimensional relationship and ratio in different drawings.

### First Embodiment

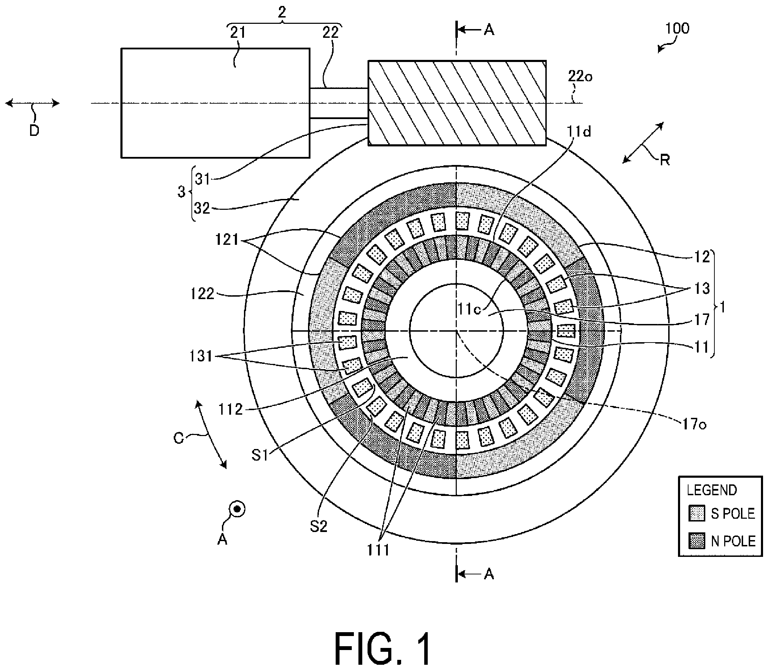

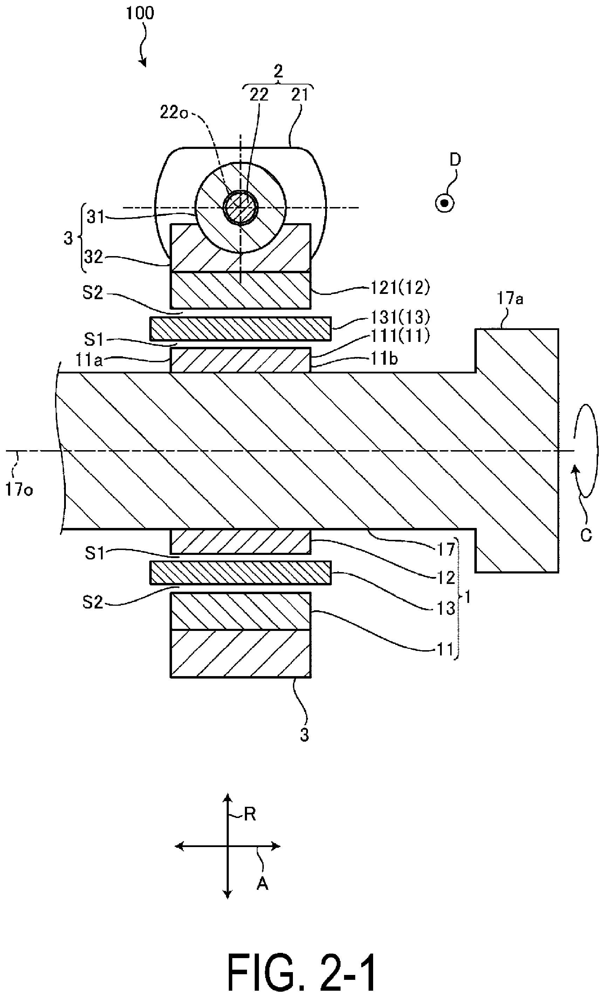

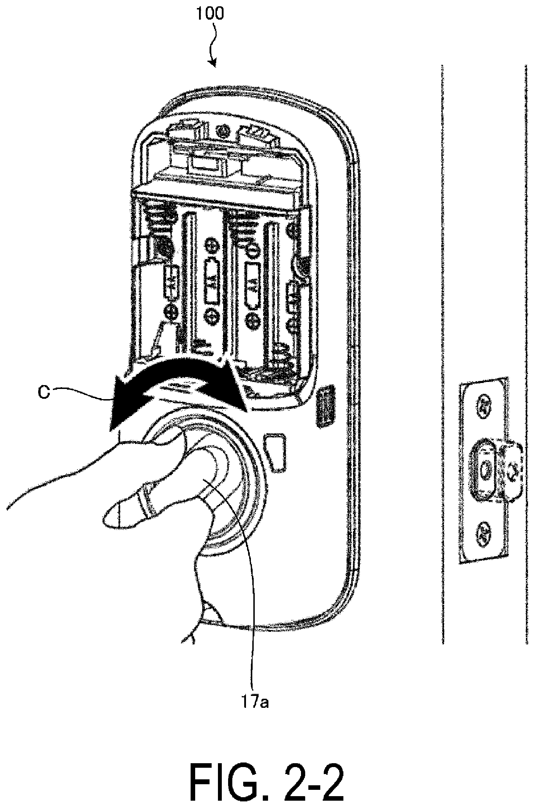

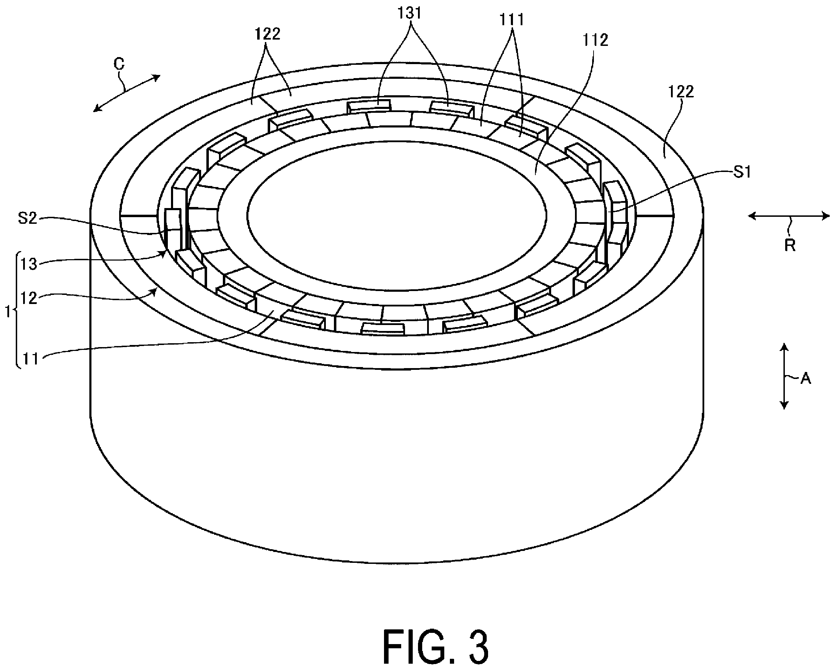

FIG. 1 is a plan view of a power transmission device 100 including a magnetic gear device 1 according to a first embodiment. FIG. 2-1 is a cross-sectional view taken along an arrow A-A in FIG. 1. FIG. 2-2 is a perspective view illustrating an electronic lock as an example of the power transmission device 100. FIG. 3 is a perspective view of the magnetic gear device 1 illustrated in FIG. 1. For convenience of illustration, back yokes 112 and 122 are omitted in FIG. 2-1, and a motor 2, an intermediate transmission mechanism 3, and a second shaft 17 are omitted in FIG. 3.

In the description of the power transmission device 100 including the magnetic gear device 1 illustrated in FIGS. 1, 2-1, 2-2, and 3 according to the embodiment, for ease of understanding directions, an extending direction of the second shaft 17 is referred to as an axial direction A, a rotation direction of a first magnet 11 and a second magnet 12 is referred to as a circumferential direction C, and a direction included in a plane orthogonal to the axial direction A, passing through axes 22o and 14o, and orthogonal to the circumferential direction C is referred to as a radial direction R.

The power transmission device (transmission) 100 illustrated in FIGS. 1, 2-1, and 2-2 according to the embodiment transmits torque of a first shaft 22 as an input shaft to the second shaft 17 as an output shaft. In the power transmission device 100 according to the present embodiment, the axis 22o of the first shaft 22 as the input shaft and an axis 17o of the second shaft 17 as the output shaft are disposed at skew positions. In other words, the power transmission device 100 according to the present embodiment is a skew-axis device having the axis 22o of the input shaft and the axis 17o of the output shaft disposed at skew positions. The power transmission device 100 includes, for example, the magnetic gear device 1, the motor 2, and the intermediate transmission mechanism 3.

The power transmission device 100 according to the first embodiment increases the torque of the first shaft 22 of the motor 2 as an input shaft by the second shaft 17 as an output shaft, and outputs the increased torque. The power transmission device 100 is accommodated in, for example, a frame (not illustrated).

The motor 2 includes, for example, a main body 21 and a first shaft 22 as an input shaft. The motor 2 is an electric motor to convert electric energy supplied from a power supply into mechanical energy as rotation of the first shaft 22. The motor 2 is an example of an input-side device in the power transmission device 100 according to the present embodiment.

The main body 21 is fixed to the frame. In addition, for example, devices such as a rotor and a stator are accommodated inside the main body 21.

The first shaft 22 is a so-called shaft, and is formed of, for example, a metal member in a circular column shape or a cylindrical shape. The first shaft 22 has an axis 22o, and is provided to be rotatable about the axis 22o with respect to the frame and the main body 21. The axis 22o of the first shaft 22 is disposed at a skew position with respect to the axis 17o of the second shaft 17. The first shaft 22 extends along a first direction D.

The intermediate transmission mechanism 3 transmits the driving force from the motor 2 to the magnetic gear device 1. The intermediate transmission mechanism 3 includes, for example, a first gear 31 and a second gear 32.

The first gear 31 is, for example, a worm. The first gear 31 is fixed to a tip end part of the first shaft 22 in the first direction D, and rotates together with the rotation of the first shaft 22.

The second gear 32 is, for example, a worm wheel formed to rotate in the circumferential direction C together with the second magnet 12 in the magnetic gear device 1. The second gear 32 meshes with the first gear 31 as a worm. The intermediate transmission mechanism 3 according to the present embodiment is constituted by the first gear 31 (worm) and the second gear 32 (worm wheel) as an example of a mechanical gear device.

When the intermediate transmission mechanism 3 and the motor 2 having the above-described configuration are driven, the first shaft 22 rotates about the axis 22o, and along with the rotation, the first gear 31 rotates about the axis 22o. The second gear 32 meshing with the first gear 31 rotates in the circumferential direction C together with the second magnet 12 about the axis 17o along with the rotation of the first gear 31.

The magnetic gear device 1 includes a first magnet 11, a second magnet 12, a first pole piece 13, and a second shaft 17. The magnetic gear device 1 according to the present embodiment is a so-called flux-modulated magnetic gear (harmonic type magnetic gear device). In the magnetic gear device 1, when the second magnet 12 coupled to the driving side rotates about the axis 17o, changes in the magnetic fluxes of a plurality of second magnetic poles 121 are modulated by the first pole piece 13 and transmitted to first magnetic poles 111 of the first magnet 11 coupled to the driven side, thus rotating the first magnet 11 about the axis 17o. In the magnetic gear device 1 according to the present embodiment, the first magnet 11, the second magnet 12, and the first pole piece 13 are formed individually.

The first magnet 11 is provided so as to be rotatable about the axis 17o with respect to the frame and the first pole piece 13. The first magnet 11 includes a plurality of (for example, fifty two) first magnetic poles 111 disposed in the circumferential direction C, and the plurality of first magnetic poles 111 are integrally formed in a ring shape. The first magnet 11 is provided to be rotatable about the axis 17o with respect to the frame and the first pole piece 13. Moreover, a first space S1 is formed between the first magnet 11 and the first pole piece 13 in the radial direction R. In other words, the first magnet 11 is provided to be rotatable about the axis 17o in a non-contact state with respect to the first pole piece 13. The first space S1 may be filled with a non-magnetic material such as a resin sliding material as long as the first magnet 11 and the pole piece 13 are allowed to rotate in a case where the first space S1 is in a vacuum state, a case where a fluid such as air, water, or oil is present, or the like.

The plurality of first magnetic poles 111 are disposed such that the N poles and the S poles are alternately arranged in the circumferential direction C. The plurality of first magnetic poles 111 of the first magnet 11 are formed by magnetizing a magnetic body as described later. Since the first magnet 11 has, for example, fifty-two first magnetic poles 111, the number of pole pairs of the first magnet 11 is fourteen.

The number of the first magnetic poles 111 of the first magnet 11 is larger than the number of the second magnetic poles 121 of the second magnet 12. In addition, the first magnet 11 is provided with, for example, a first back yoke 112 provided at the inner side in the radial direction R. In the magnetic gear device 1 according to the present embodiment, the first magnet 11 and the second magnet 12 are disposed so as to be rotatable about the common axis 17o.

Here, as illustrated in FIGS. 2-1 and 3, the first magnet 11 is formed in a ring shape, and has a downward side surface 11a and an upward side surface 11b. Further, the first magnet 11 has a through hole 11c and an outer peripheral surface 11d. The first magnet 11 is a rare-earth iron-based magnet, and in the present embodiment, is formed by, for example, mixing magnetic powder containing neodymium (Nd-Fe-B), as a magnetically isotropic rare-earth iron-based magnet, and a thermosetting resin, for example, an epoxy resin, at predetermined ratios.

The rare-earth iron-based magnet before magnetization, as the material of the first magnet 11, is preferably an anisotropic rare-earth iron-based magnet having an average grain size of 10 nm or more and 10000 nm or less, and more preferably an anisotropic rare-earth iron-based magnet having an average grain size of 10 nm or more and 6600 nm or less.

The first magnet 11 is formed by magnetizing a magnetization target, as the rare-earth iron-based magnet before magnetization described above, by increasing the temperature of the magnetization target from a temperature lower than the Curie point to the Curie point or higher and decreasing the temperature from the Curie point or higher to a temperature lower than the Curie point while the magnetization magnetic field is applied by a field magnet unit.

In addition, in a case where a permanent magnet as the magnetization target is constituted by a rare-earth magnet (for example, an Nd bond magnet) having high magnetic characteristics in response to miniaturization and high resolution of a device (for example, a magnetic encoder) of use, a conventional coil energization method including applying a pulse current requires applying a greater current, and is considered to incur a problem that a magnetizing device is increased in size and price. In contrast, the first magnet 11 described in the present embodiment is formed from a magnetization target by performing multipolar magnetization, by heating the magnetization target by a heating unit, and decreasing the temperature from a temperature equal to or higher than the Curie point of the magnetic powder constituting the magnetization target to a temperature lower than the Curie point, while continuously generating a magnetic field by the permanent magnet of the field magnet unit (for example, see JP 2021-93521 A).

By forming the first magnet 11 in this manner, it is possible to achieve the uniformity of the magnetization characteristics of the magnetization target. Moreover, by forming the first magnet 11 as described above, the pitch of the plurality of first magnetic poles 111 in the circumferential direction C (for example, equal to or less than 3 mm in the circumferential direction C) can be reduced. In particular, when the first magnet 11 having a larger number of first magnetic poles is disposed at the inner side in the radial direction R with respect to the second magnet 12 having a smaller number of second magnetic poles 121, as in the present embodiment, the pitch of the first magnetic poles 111 needs to be further reduced. The pitch of the first magnetic poles 111 is measured at the outer periphery of the first magnet 11.

The second magnet 12 is provided to be rotatable about the axis 17o with respect to the frame and the first pole piece 13. Moreover, a second space S2 is formed between the second magnet 12 and the first pole piece 13 in the radial direction R. In other words, the second magnet 12 is provided to be rotatable about the axis 17o in a non-contact state with respect to the first pole piece 13. The second magnet 12 is formed similarly to the first magnet 11. That is, the second magnet 12 includes a plurality of (six) second magnetic poles 121 disposed in the circumferential direction C, and the plurality of second magnetic poles 121 are integrally formed in a ring shape. The plurality of second magnetic poles 121 are disposed such that the N poles and the S poles are alternately arranged in the circumferential direction C. Since the second magnet 12 has, for example, six second magnetic poles 121, the number of pole pairs of the second magnet 12 is three. In addition, the second magnet 12 is provided with a second back yoke 122 provided, for example, at the outer side in the radial direction R. The second space S2 may be filled with a non-magnetic material such as a resin sliding material as long as the second magnet 12 and the first pole piece 13 are allowed to rotate in a case where the second space S2 is in a vacuum state, a case where a fluid such as air, water, or oil is present, or the like.

The first pole piece 13 is constituted by a plurality of (for example, twenty nine) first modulation pieces 131, and modulates the magnetic flux of the magnets 11 and 12. The first pole piece 13 is located between the first magnet 11 and the second magnet 12 in the radial direction R, and magnetically couples the first magnet 11 and the second magnet 12. The first modulation pieces 131 are each formed of, for example, a magnetic body, are arranged at equal intervals along the circumferential direction C, and are fixed to a frame (not illustrated).

In the magnetic gear device 1 according to the present embodiment, the number 11M of pole pairs of the first magnet 11 is twenty six, the number 12M of pole pairs of the second magnet 12 is three, and the number 13M of the modulation pieces 131 of the first pole piece 13 is twenty nine. Therefore, when the second magnet 12 at the outer side in the radial direction R is used for the input, the first magnet 11 at the inner side in the radial direction R is used for the output, and the first pole piece 13 is fixed, a reduction ratio X1 can be calculated as follows. $X 1 = 11 M / 12 M = 26 / 3 = 8.67$

Alternatively, when the second magnet 12 is used for the input, the first pole piece 13 is used for the output, the first magnet 11 is fixed, and the second magnet 12 is disposed at the input side, a reduction ratio X2 can be calculated as follows. $X 2 = 13 M / 12 M = 29 / 3 = 9.67$

The second shaft 17 is a so-called shaft, and is formed of, for example, a metal member in a circular column shape or a cylindrical shape. The second shaft 17 has an axis 17o, and is provided to be rotatable about the axis 17o with respect to the frame. The second shaft 17 is fixed to the inner peripheral surface of the first back yoke 112 of the first magnet 11 in the radial direction R, and rotates in the circumferential direction C together with the first magnet 11. The magnetic gear device 1 outputs torque to the outside by the second shaft 17 rotating in the circumferential direction C about the axis 17o. The power transmission device 100 according to the present embodiment is applied to, for example, an electronic lock as illustrated in FIG. 2-2. In the electronic lock, for example, one end part of the second shaft 17 of the magnetic gear device 1 is coupled to a rotation shaft of the lock, and the rotation shaft of the lock is rotated by the operation of the motor 2, thus locking or unlocking the lock. The other end part 17a of the second shaft 17 is provided on the frame so as to be exposed to the outside, and the second shaft 17 can be rotated in the circumferential direction C by manual operation by an operator.

In the power transmission device 100 according to the present embodiment, when the second gear 32 is rotated in the circumferential direction C by driving the motor 2, the second back yoke 122 and the second magnet 12 fixed to the second gear 32 are rotated in the circumferential direction C together with the second gear 32. The change in the magnetic flux of the second magnetic poles 121 of the second magnet 12 is modulated by the first pole piece 13 and transmitted to the first magnetic poles 111 of the first magnet 11 coupled to the driven side. At this time, in the magnetic gear device 1 according to the present embodiment, the number of the first magnetic poles 111 of the first magnet 11 disposed at the inner side of the second magnet 12 in the radial direction R is larger than the number of the second magnetic poles 121 of the second magnet 12, and therefore the torque can be increased although the rotation speed in the circumferential direction C is reduced. Moreover, in the magnetic gear device 1 according to the present embodiment, the first magnet 11 has a ring shape where the plurality of first magnetic poles 111 are disposed in the circumferential direction C and the plurality of first magnetic poles 111 are integrally formed. Therefore, in the magnetic gear device 1 according to the present embodiment, the pitch of the plurality of first magnetic poles 111 in the circumferential direction C can be reduced, and thus the torque can be increased, as compared with, for example, a magnetic gear device (for example, a device described in JP 2022-150601 A) including a ring-shaped first magnet formed by coupling a plurality of magnets formed individually.

In the magnetic gear device 1 according to the present embodiment, the first magnet 11 and the first pole piece 13 are not in contact with each other in the radial direction R, and the first pole piece 13 and the second magnet 12 are not in contact with each other in the radial direction R. Moreover, in the magnetic gear device 1, the first pole piece 13 is disposed between the first magnet 11 and the second magnet 12 in the radial direction R, and the first magnet 11 and the second magnet 12 are magnetically coupled to each other by the first pole piece 13. Therefore, when torque equal to or greater than the maximum transmission torque set by the magnetic force of the second magnetic poles 121 and the gap between the second magnet 12 and the first pole piece 13 in the radial direction R is applied to the magnetic gear device 1, the magnetic gear device 1 functions as a torque limiter, and the rotation of the first magnet 11 in the circumferential direction C is stopped even in a state where the second magnet 12 is rotating in the circumferential direction C. Therefore, the magnetic gear device 1 according to the present embodiment can protect the motor 2 by separating the driving side and the driven side from each other at the time of overload. Alternatively, when unintended torque is generated by the motor 2, the magnetic gear device 1 functions as a torque limiter, and can protect the load side by separating the driving side and the driven side from each other. In addition, when the magnetic gear device 1 is used in an electric opening/closing mechanism of a home electric appliance, the magnetic gear device 1 can block the torque from the driving side when a load-side member comes into contact with a human body, and thus can also serve as a safety device to minimize the effect on the human body.

As described above, the power transmission device 100 according to the present embodiment includes the magnetic gear device 1 and a mechanical gear device as the intermediate transmission mechanism 3 connected to the magnetic gear device 1, and the magnetic gear device 1 is a harmonic type magnetic gear device. Therefore, the torque density can be increased as described later. The power transmission device 100 includes the motor 2 as an input-side device and the magnetic gear device 1 to receive the driving force of the motor 2 indirectly transmitted, and the magnetic gear device 1 is of a harmonic type. More specifically, the magnetic gear device 1 is a harmonic type magnetic gear device configured such that the plurality of first magnetic poles 111 of the first magnet 11 and the plurality of second magnetic poles 121 of the second magnet 12 are magnetically coupled to each other with the first pole piece 13 interposed in the radial direction R in a state where one of the ring-shaped first magnet 11 and the ring-shaped second magnet 12 is disposed at the outer side in the radial direction R and the other is disposed at the inner side in the radial direction R. Therefore, in the magnetic gear device 1 according to the present embodiment, the first magnetic poles 111 and the second magnetic poles 121 can be magnetically coupled to each other around the entire circumference of the axis, and thus the torque density can be increased and the torque can be increased, as compared with a magnetic gear device (for example, JP 2011-196451 A) including the first magnet and the second magnet disposed such that a part of the outer peripheral surface of the ring-shaped first magnet and a part of the outer peripheral surface of the ring-shaped second magnet overlap each other in the axial direction.

The magnetic gear device 1 according to the present embodiment includes the ring-shaped first magnet 11 including the plurality of first magnetic poles 111 disposed in the circumferential direction C and integrally formed, the ring-shaped second magnet 12 including the plurality of second magnetic poles 121 disposed in the circumferential direction C, and the first pole piece 13 located between the first magnet 11 and the second magnet 12 and magnetically coupling the first magnet 11 and the second magnet 12.

In the magnetic gear device 1 according to the present embodiment, the first magnet 11 includes the plurality of first magnetic poles 111 integrally formed. Therefore, the magnetic gear device can be reduced in size and weight as compared with a magnetic gear device including a first magnet formed by coupling individually formed magnets in the circumferential direction C. Moreover, since the magnetic gear device 1 includes the first magnet 11 having the above configuration, the number of components can be reduced, the shape of the back yoke 112 and/or the frame can be simplified, and it is not necessary to provide a cover for preventing the first magnetic poles 111 from falling off. In addition, in the first magnet 11, the pitch of the plurality of first magnetic poles 111 in the circumferential direction C is small, and therefore the torque ripple can be reduced. Further, in the magnetic gear device 1 according to the present embodiment, since the number of the first magnetic poles 111 of the first magnet 11 is larger than the number of the second magnetic poles 121 of the second magnet 12, the torque (torque at the output side) of the second shaft 17 coupled to the first magnet 11 of the magnetic gear can be increased compared to the torque (torque at the input side) of the first shaft 22 of the motor 2. Moreover, in the magnetic gear device 1 according to the present embodiment, the first magnet 11 and the first pole piece 13 are not in contact with each other in the radial direction R, and the first pole piece 13 and the second magnet 12 are not in contact with each other in the radial direction R, making it possible to reduce the sound generated during driving, to prevent the generation of dust due to use, and to eliminate the need to use a lubricant. In addition, since the magnetic gear device 1 does not generate dust due to use and eliminates the need to use a lubricant for the use, it is not necessary to perform maintenance.

Since the magnetic gear device 1 according to the present embodiment has the above-described functions and effects, the magnetic gear device 1 can be applied to, for example, a device used in a clean room where dust generation or the like is unfavorable, a device used under a special environment such as the ocean or the aerospace, a house facility or a home appliance requiring safety assurance upon contact with a human body or countermeasures against overload, an electric generator utilizing high efficiency, and the like. More specifically, the magnetic gear device 1 can be applied to a robot arm, a semiconductor manufacturing device, an electric opening/closing mechanism or an electronic lock of a home electric appliance, a cooling pump of an air conditioner or the like, a cooling fan, and the like.

Further, since the intermediate transmission mechanism 3 according to the present embodiment is constituted by the first gear 31 as a worm and the second gear 32 as a worm wheel, it is possible to reduce the sound generated when the motor 2 is driven.

In the magnetic gear device 1 according to the present embodiment, the plurality of first magnetic poles 111 of the first magnet 11 are integrally formed to have a ring shape, and the plurality of second magnetic poles 121 of the second magnet are integrally formed to have a ring shape. Therefore, the size and weight can be reduced as compared with a magnetic gear device including a first magnet and a second magnet formed by coupling individually formed magnets in the circumferential direction C.

When the power transmission device 100 according to the present embodiment is used for an electronic lock as illustrated in FIG. 2-2, the electronic lock can be electrically locked or unlocked via the magnetic gear device 1 by the operation of the motor 2. On the other hand, when a person manually operates a knob attached to the second shaft 17a of the electronic lock, the magnetic gear device 1 functions as a clutch, and thus the opening/closing shaft of the lock can be directly operated, and locking or unlocking can be manually performed.

In the magnetic gear device 1 according to the present embodiment, the first pole piece 13 is located between the first magnet 11 and the second magnet 12 in the radial direction R.

In the magnetic gear device 1 according to the present embodiment, the first magnet 11 is disposed at the inner side of the second magnet 12 in the radial direction R. In the magnetic gear device 1 according to the present embodiment, the ring-shaped first magnet 11 including the plurality of first magnetic poles 111 integrally formed is formed by magnetizing the magnetic body as described above, and thus the ring-shaped first magnet 11 can be disposed even at a small pitch at the inner side in the radial direction R.

In the magnetic gear device 1 according to the above-described embodiment, the first pole piece 13 is fixed, the first magnet 11 disposed at the inner side in the radial direction R is not fixed and rotates together with the second shaft 17, and the second magnet 12 disposed at the outer side in the radial direction R is not fixed and rotates together with the second gear 32. However, the magnetic gear device 1 according to the present embodiment is not limited to such a configuration. For example, as indicated in Table 1, any one of the first magnet 11, the second magnet 12, and the first pole piece 13 may be fixed, and the remaining two may be not fixed. Further, one of the first magnet 11 and the second magnet 12 may be disposed at the inner side in the radial direction R, and the other may be disposed at the outer side in the radial direction R. Table 1

**(Table 1)**

| | First embodiment | Another example | Another example | Another example | Another example | Another example |
|---|---|---|---|---|---|---|
| Magnet disposed at inner side in radial direction | Input side Not fixed (coupled to intermediate ransmission mechanism 3 and rotatable in circumferential direction C) | Fixed | Input side Not fixed (coupled to intermediate transmission mechanism 3 and rotatable in circumferential direction C) | Fixed | Output side Not fixed (fixed to second shaft 14 and rotatable in circumferential direction C) | Output side Not fixed (fixed to second shaft 14 and rotatable in circumferential direction C) |
| Pole piece | Fixed | Input side Not fixed (coupled to intermediate transmission mechanism 3 and rotatable in circumferential direction C) | Output side Not fixed (fixed to second shaft 14 and rotatable in circumferential direction C) | Output side Not fixed (fixed to second shaft 14 and rotatable in circumferential direction C) | Fixed | Input side Not fixed (coupled to intermediate transmission mechanism 3 and rotatable in circumferential direction C) |
| Magnet disposed at outer side in radial direction | Output side Not fixed (fixed to second shaft 14 and rotatable in circumferential direction C) | Output side Not fixed (fixed to second shaft 14 and rotatable in circumferential direction C) | Fixed | Input side Not fixed (coupled to intermediate ransmission mechanism 3 and rotatable in circumferential direction C) | Input side Not fixed (coupled to intermediate transmission mechanism 3 and rotatable in circumferential direction C) | Fixed |

In the magnetic gear device 1 according to the above-described embodiment, the first magnet 11 includes fifty-two (twenty-six pole pairs of) first magnetic poles 111. However, the number of the first magnetic poles 111 of the first magnet 11 according to the present embodiment is not limited to such a number, and can be set to any number.

Further, in the magnetic gear device 1 according to the above-described embodiment, the second magnet 12 includes six (three pole pairs of) second magnetic poles 121. However, the number of the second magnetic poles 121 of the second magnet 12 according to the present embodiment is not limited to such a number, and can be set to any number.

In the magnetic gear device 1 according to the above-described embodiment, the first pole piece 13 is constituted by twenty-nine modulation pieces 131. However, the number of the modulation pieces 131 constituting the first pole piece 13 according to the present embodiment is not limited to such a number, and can be set to any number. When two of the number of the first magnetic poles 111 of the first magnet, the number of the second magnetic poles 121 of the second magnet, and the number of the modulation pieces 131 of the first pole piece 13 are determined to be desired numbers, the one remaining number is appropriately set according to the two other numbers.

Further, in the power transmission device 100 according to the above-described embodiment, the intermediate transmission mechanism 3 includes the first gear 31 as a worm and the second gear 32 as a worm wheel. However, the intermediate transmission mechanism 3 according to the present embodiment is not limited to such a configuration. For example, the intermediate transmission mechanism 3 may include a first gear as a screw gear, and a second gear 32 as a screw gear meshing with the first gear. Of course, the intermediate transmission mechanism 3 is not limited to such a configuration, and may be composed of a plurality of meshing gears, or may be configured using other gears. For example, helical gears or the like can be used as the other gears.

In the magnetic gear device 1 according to the above-described embodiment, the second magnet 12 includes the plurality of second magnetic poles 121 disposed in the circumferential direction C, and the plurality of second magnetic poles 121 are integrally formed in a ring shape. However, the second magnet 12 according to the present embodiment can also be formed by joining a plurality of magnets each formed in an arc shape and having two second magnetic poles 121. Similarly, the first magnet 11 can also be formed by joining a plurality of magnets each having two first magnetic poles 111.

In the magnetic gear device 1 according to the above-described embodiment, the input shaft and the output shaft can be replaced with each other by, for example, coupling the first shaft 22 of the motor 2 to the first magnet 11 to be used as the input shaft, and using the second magnet 12 as the output shaft. In this case, the torque is reduced, while the speed can be increased. In this case, when the first magnet 11 at the inner side in the radial direction R is used for the input, the second magnet 12 at the outer side in the radial direction R is used for the output, and the first pole piece 13 is fixed, a speed increase ratio X3 can be calculated as follows. $X 3 = 11 M / 12 M = 26 / 3 = 8.67$

Alternatively, when the first pole piece 13 is used for the output, the first magnet 11 is used for the input, and the second magnet 12 is fixed, a speed increase ratio X4 can be calculated as follows. $X 4 = 13 M / 12 M = 29 / 3 = 9.67$

In addition, for example, in the magnetic gear device 1 according to the above-described embodiment, when the first magnet 11 and the second magnet 12 are exchanged, the first magnet 11 is located at the outer side in the radial direction R, the second magnet 12 is located at the inner side in the radial direction R, the first shaft 22 of the motor 2 is coupled to the second magnet 12 to be used as the input shaft, the first magnet 11 is used as the output shaft, and the first pole piece 13 is fixed, a reduction ratio X5 can be calculated as follows. $X 5 = 11 M / 12 M = 26 / 3 = 8.67$

Alternatively, when the first pole piece 13 is used for the output, the first magnet 11 is fixed, and the second magnet 12 is used for the input, a reduction ratio X6 can be calculated as follows. $X 6 = 13 M / 12 M = 29 / 3 = 9.67$

In the power transmission device 100 according to the above-described embodiment, the intermediate transmission mechanism 3 is provided between the motor 2 and the magnetic gear device 1. However, the power transmission device according to the present embodiment is not limited to such a configuration, and the intermediate transmission mechanism 3 may not be provided. That is, the magnetic gear device 1 according to the present embodiment is a device configured to receive power directly or indirectly input from the motor 2 as a drive source. The drive source may be other than the motor 2.

### First Modified Example of First Embodiment

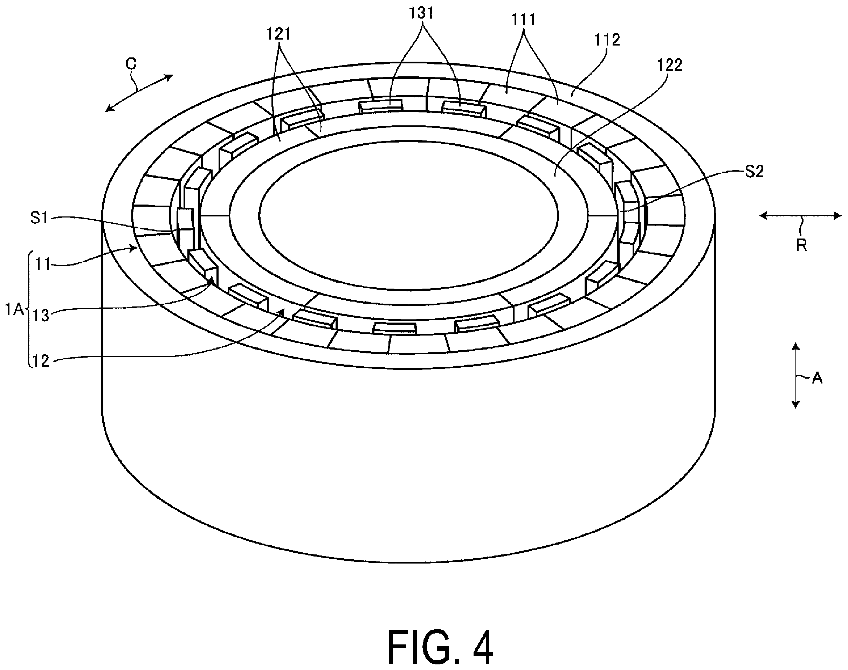

Next, a magnetic gear device 1A according to a first modified example of the first embodiment will be described with reference to FIG. 4. FIG. 4 is a plan view of a magnetic gear device 1A according to a first modified example of the first embodiment. Note that in the configuration of the magnetic gear device 1A according to the first modified example of the first embodiment, the same components as the components of the magnetic gear device 1 according to the first embodiment are denoted by the same reference numerals and the description of such components is omitted. Although not illustrated, the motor 2 and the intermediate transmission mechanism 3 similar to the motor 2 and the intermediate transmission mechanism 3 of the power transmission device 100 according to the first embodiment are disposed at the outer side of the magnetic gear device 1A in the radial direction R.

The magnetic gear device 1A according to the present embodiment includes a first magnet 11, a second magnet 12, and a first pole piece 13.

The first magnet 11 is disposed at the outer side of the second magnet 12 in the radial direction R in the magnetic gear device 1A, and the first back yoke 112 is fixed to the inner peripheral surface of the second gear 32. The first magnet 11 according to the present modified example is disposed at the input side (driving side) with respect to the second magnet 12.

The second magnet 12 is disposed at the inner side of the first magnet 11 in the radial direction R in the magnetic gear device 1A, and the second back yoke 122 is fixed to the outer peripheral surface of the second shaft 17. The second magnet 12 according to the present modified example is disposed at the output side (driven side) with respect to the first magnet 11.

In the power transmission device according to the present modified example, when the second gear 32 is rotated in the circumferential direction C by driving the motor 2, the first back yoke 112 and the first magnet 11 fixed to the second gear 32 rotate in the circumferential direction C together with the second gear 32. The change in the magnetic flux of the first magnetic poles 111 of the first magnet 11 is modulated by the first pole piece 13 and transmitted to the second magnetic poles 121 of the second magnet 12 coupled to the driven side. At this time, in the magnetic gear device 1 according to the present modified example, since the number of the second magnetic poles 121 of the second magnet 12 disposed at the inner side of the first magnet 11 in the radial direction R is smaller than the number of the first magnetic poles 111 of the first magnet 11, the rotation speed in the circumferential direction C can be increased although the torque is decreased. Moreover, in the magnetic gear device 1A according to the present modified example, the first magnet 11 has a ring shape where the plurality of first magnetic poles 111 are disposed in the circumferential direction C and the plurality of first magnetic poles 111 are integrally formed. Therefore, in the magnetic gear device 1A according to the present modified example, the pitch of the plurality of first magnetic poles 111 in the circumferential direction C can be reduced, and thus the speed can be increased, as compared with, for example, a magnetic gear device (for example, a device described in JP 2022-150601 A) including a ring-shaped first magnet formed by coupling a plurality of magnets formed individually.

As described above, in the magnetic gear device 1A according to the present modified example, the first magnet 11 is disposed at the outer side of the second magnet 12 in the radial direction R, and the number of the first magnetic poles 111 of the first magnet 11 is larger than the number of the second magnetic poles 121 of the second magnet 12. Therefore, with the magnetic gear device 1A according to the present embodiment, the speed of the second shaft 17 of the magnetic gear device 1A (output-side rotation speed) can be increased to be higher than the speed of the first shaft 22 of the motor 2 (input-side rotation speed). The magnetic gear device 1A according to the present modified example has the same functions and effects as the magnetic gear device 1 according to the first embodiment.

In the magnetic gear device 1A according to the present modified example, the second magnet 12 is disposed at the inner side of the first magnet 11 in the radial direction R.

### Second Modified Example of First Embodiment

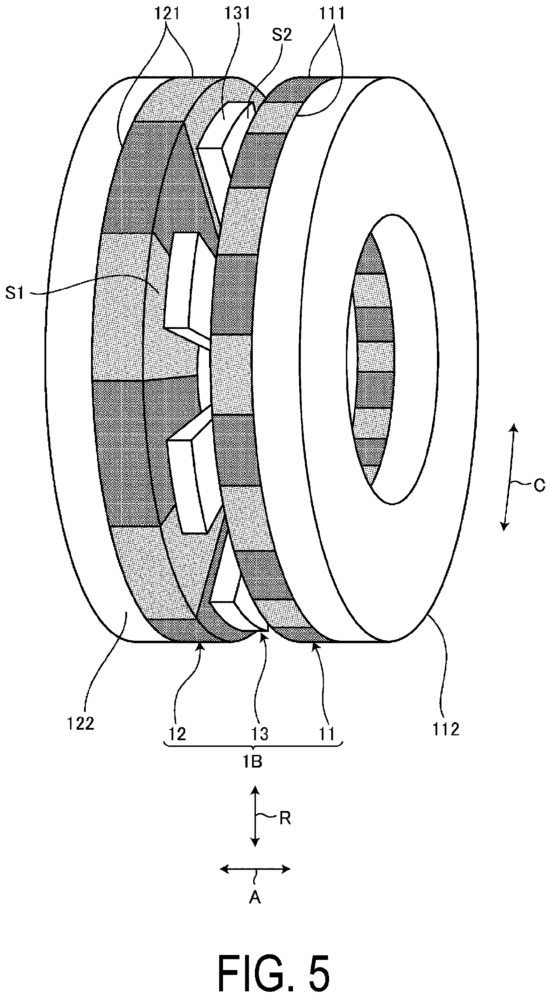

Next, a magnetic gear device 1B according to a second modified example of the first embodiment will be described with reference to FIG. 5. FIG. 5 is a perspective view of a magnetic gear device 1B according to a second modified example of the first embodiment. Note that in the configuration of the magnetic gear device 1B according to the second modified example of the first embodiment, the same components as the components of the magnetic gear device 1 according to the first embodiment are denoted by the same reference numerals and the description of such components is omitted. Although not illustrated, the motor 2 and the intermediate transmission mechanism 3 similar to the motor 2 and the intermediate transmission mechanism 3 of the power transmission device 100 according to the first embodiment are disposed at the outer side of the magnetic gear device 1B.

The magnetic gear device 1B according to the present embodiment includes a first magnet 11, a second magnet 12, and a first pole piece 13, and the first magnet 11 and the second magnet 12 are opposed to each other in the axial direction A with the first pole piece 13 interposed.

The first back yoke 112 of the first magnet 11 is fixed to the outer peripheral surface of the second shaft 17. That is, the first magnet 11 according to the present modified example is disposed at the output side (driven side) with respect to the second magnet 12.

The second back yoke 122 of the second magnet 12 is fixed to the inner peripheral surface of the second gear 32. That is, the second magnet 12 according to the present modified example is disposed at the input side (driving side) with respect to the first magnet 11.

As described above, in the magnetic gear device 1B according to the present modified example, the first magnet 11 and the second magnet 12 are opposed to each other in the axial direction A with the first pole piece 13 interposed.

In the magnetic gear device 1B according to the present embodiment, the axis of the first magnet 11 and the axis of the second magnet 12 can be disposed coaxially, and therefore, the magnetic gear device 1B can be easily modularized, and the flexibility of layout can be improved. The magnetic gear device 1B according to the present modified example has the same functions and effects as the magnetic gear device 1 according to the first embodiment.

### Second Embodiment

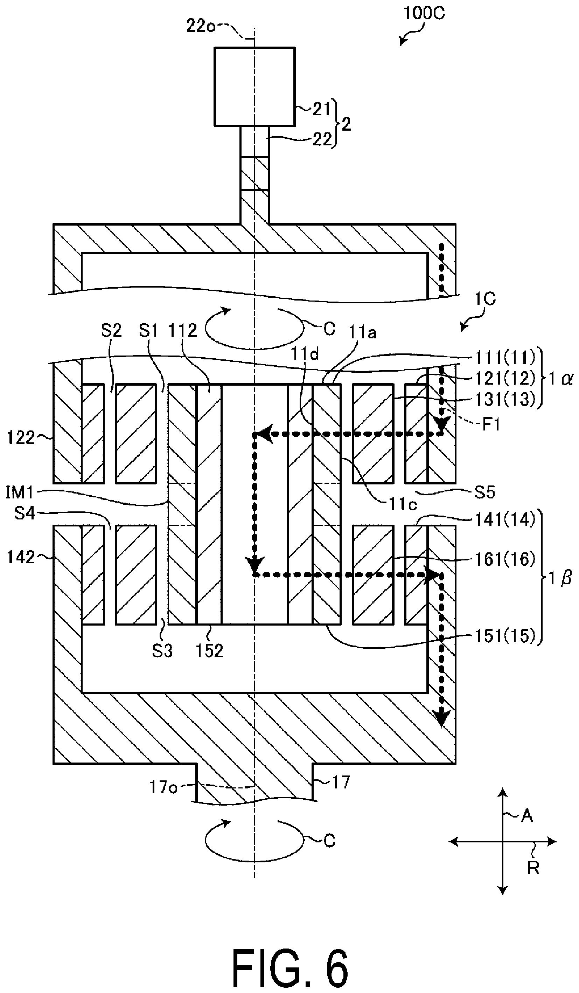

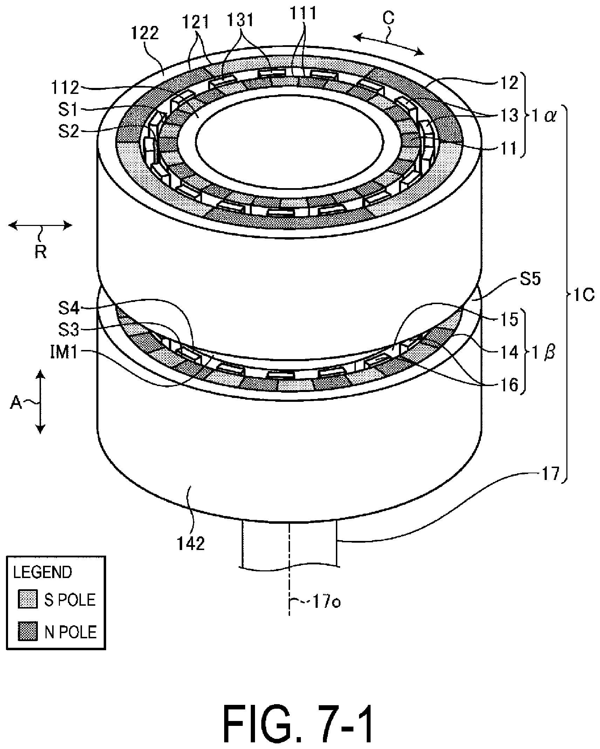

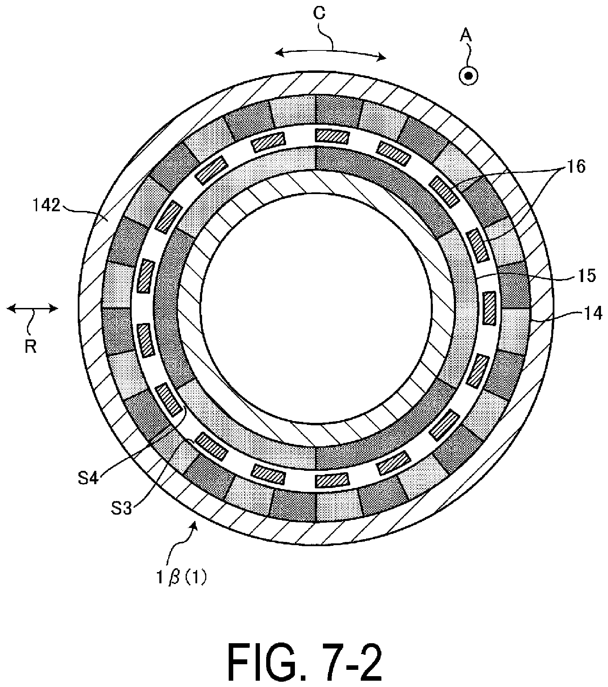

FIG. 6 is a cross-sectional view of a power transmission device 100C including a magnetic gear device 1C according to a second embodiment. FIG. 7-1 is a perspective view of the magnetic gear device 1C illustrated in FIG. 6. FIG. 7-2 is a plan view of a second magnetic gear mechanism 1β included in the magnetic gear device 1C illustrated in FIG. 6. Note that in the configuration of the magnetic gear device 1C according to the second embodiment, the same components as the components of the magnetic gear device 1 according to the first embodiment are denoted by the same reference numerals and the description of such components is omitted. For convenience of illustration, the motor 2 is omitted in FIGS. 7-1 and 7-2. Further, in FIG. 6, the transmission path of the driving force of the motor 2 is indicated by arrows F1.

In the description of the power transmission device 100C including the magnetic gear device 1C illustrated in FIGS. 6, 7-1, and 7-2 according to the embodiment, for ease of understanding directions, an extending direction of the second shaft 17 is referred to as an axial direction A, a rotation direction of the first magnet 11, the second magnet 12, a third magnet 14, and a fourth magnet 15 is referred to as a circumferential direction C, and a direction included in a plane orthogonal to the axial direction A, passing through the axis 17o, and orthogonal to the circumferential direction C is referred to as a radial direction R.

The power transmission device (transmission) 100 illustrated in FIGS. 6, 7-1, and 7-2 according to the present embodiment transmits torque of the first shaft 22 as an input shaft to the second shaft 17 as an output shaft. In the power transmission device 100C according to the present embodiment, an axis 22o of the first shaft 22 as the input shaft and an axis 17o of the second shaft 17 as the output shaft are disposed in parallel to each other. The power transmission device 100C includes, for example, a magnetic gear device 1C and a motor 2.

The power transmission device 100C according to the second embodiment increases the torque of the first shaft 22 of the motor 2 as an input shaft by the second shaft 17 as an output shaft, and outputs the increased torque. The power transmission device 100C is accommodated in, for example, a frame (not illustrated).

The motor 2 includes, for example, a main body 21 and a first shaft 22 as an input shaft. The motor 2 is an electric motor to convert electric energy supplied from a power supply into mechanical energy as rotation of the first shaft 22.

The main body 21 is fixed to the frame. In addition, for example, devices such as a rotor and a stator are accommodated inside the main body 21.

The first shaft 22 is a so-called shaft, and is formed of, for example, a metal member in a circular column shape or a cylindrical shape. The first shaft 22 has an axis 22o, and is provided to be rotatable about the axis 22o with respect to the frame and the main body 21. The first shaft 22 extends along, for example, the axial direction A.

When the motor 2 having the above-described configuration is driven, the first shaft 22 rotates about the axis 22o, and along with the rotation, rotates in the circumferential direction C about the axis 17o together with the second back yoke 122 and the second magnet 12.

The magnetic gear device 1C includes, for example, a first magnet 11, a second magnet 12, a first pole piece 13, a third magnet 14, a fourth magnet 15, a second pole piece 16, and a second shaft 17. In the magnetic gear device 1C according to the present embodiment, the first magnet 11, the second magnet 12, and the first pole piece 13 constitute a first magnetic gear mechanism 1α, and the third magnet 14, the fourth magnet 15, and the second pole piece 16 constitute a second magnetic gear mechanism 1β. That is, the magnetic gear device 1C is a device including two stages of magnetic gear mechanisms 1α and 1β arranged in the axial direction A. More specifically, the magnetic gear device 1C is a device including the first magnetic gear mechanism 1α and the second magnetic gear mechanism 1β coupled in the axial direction A.

The first magnetic gear mechanism 1α is disposed at one side in the axial direction A where the first shaft 22 as the input shaft is disposed. The second magnetic gear mechanism 1β is disposed at the other side in the axial direction A where the second shaft 17 as the output shaft is disposed.

The first magnet 11 is provided in the magnetic gear device 1C so as to be rotatable about the axis 17o with respect to the frame and the first pole piece 13. The first magnet 11 includes a plurality of (for example, fifty two) first magnetic poles 111 disposed in the circumferential direction C, and the plurality of first magnetic poles 111 are integrally formed in a ring shape. Moreover, a first space S1 is formed between the first magnet 11 and the first pole piece 13 in the radial direction R. In other words, the first magnet 11 is provided to be rotatable about the axis 17o in a non-contact state with respect to the first pole piece 13. The first space S1 may be filled with a non-magnetic material such as a resin sliding material as long as the first magnet 11 and the first pole piece 13 are allowed to rotate in a case where the first space S1 is in a vacuum state, a case where a fluid such as air, water, or oil is present, or the like.

The plurality of first magnetic poles 111 are disposed such that the N poles and the S poles are alternately arranged in the circumferential direction C. The plurality of first magnetic poles 111 of the first magnet 11 are formed by magnetizing a magnetic body as described later.

The number of the first magnetic poles 111 of the first magnet 11 is larger than the number of the second magnetic poles 121 of the second magnet 12. In addition, the first magnet 11 is provided with, for example, a first back yoke 112 provided at the inner side in the radial direction R. In the magnetic gear device 1C according to the present embodiment, the first magnet 11 and the second magnet 12 are disposed so as to be rotatable about the common axis 170.

The second magnet 12 is provided to be rotatable about the axis 17o with respect to the frame and the first pole piece 13. Moreover, a second space S2 is formed between the second magnet 12 and the first pole piece 13 in the radial direction R. In other words, the second magnet 12 is provided to be rotatable about the axis 17o in a non-contact state with respect to the first pole piece 13. The second magnet 12 is formed similarly to the first magnet 11. That is, the second magnet 12 includes a plurality of (six) second magnetic poles 121 disposed in the circumferential direction C, and the plurality of second magnetic poles 121 are integrally formed in a ring shape. The plurality of second magnetic poles 121 are disposed such that the N poles and the S poles are alternately arranged in the circumferential direction C. In addition, the second magnet 12 is provided with a second back yoke 122 at the outer side of the second magnetic poles 121 in the radial direction R. The second back yoke 122 is fixed to the first shaft 22. The second space S2 may be filled with a non-magnetic material such as a resin sliding material as long as the second magnet 12 and the first pole piece 13 are allowed to rotate in a case where the second space S2 is in a vacuum state, a case where a fluid such as air, water, or oil is present, or the like.

The first pole piece 13 is constituted by a plurality of (for example, twenty nine) first modulation pieces 131. The first pole piece 13 is located between the first magnet 11 and the second magnet 12 in the radial direction R, and magnetically couples the first magnet 11 and the second magnet 12. The first modulation pieces 131 are each formed of, for example, a magnetic body, are arranged at equal intervals along the circumferential direction C, and are fixed to a frame (not illustrated).

In the magnetic gear mechanism 1α according to the present embodiment, the number 11M of pole pairs of the first magnet 11 is twenty six, the number 12M of pole pairs of the second magnet 12 is three, and the number 13M of the modulation pieces 131 of the first pole piece 13 is twenty nine. Therefore, when the second magnet 12 at the outer side in the radial direction R is used for the input, the first magnet 11 at the inner side in the radial direction R is used for the output, and the first pole piece 13 is fixed, a reduction ratio X1 can be calculated as follows. $X 1 = 11 M / 12 M = 26 / 3 = 8.67$

Alternatively, in the magnetic gear mechanism 1α, when the second magnet 12 is used for the input, the first pole piece 13 is used for the output, the first magnet 11 is fixed, and the second magnet 12 is disposed at the input side, a reduction ratio X2 can be calculated as follows. $X 2 = 13 M / 12 M = 29 / 3 = 9.67$

In the first magnetic gear mechanism 1α, the first magnet 11, the second magnet 12, and the first pole piece 13 are formed individually.

In the first magnetic gear mechanism 1α, the second magnet 12 is disposed at the outer side in the radial direction R, and the first magnet 11 is disposed at the inner side of the second magnet 12 in the radial direction R.

The first magnetic gear mechanism 1α is a so-called flux-modulated magnetic gear (harmonic type magnetic gear device). In the first magnetic gear mechanism 1α, when the second back yoke 122 and the second magnet 12 coupled to the driving side rotate in the circumferential direction XC about the axis 17o, changes in the magnetic fluxes of the plurality of second magnetic poles 121 are modulated by the first pole piece 13 and transmitted to first magnetic poles 111 of the first magnet 11 coupled to the driven side, thus rotating the first magnet 11 about the axis 17o.

In the first magnetic gear mechanism 1α, the number of the first magnetic poles 111 of the first magnet 11 disposed at the inner side of the second magnet 12 in the radial direction R is larger than the number of the second magnetic poles 121 of the second magnet 12, and therefore when the first magnetic gear mechanism 1α is operated, the torque can be increased although the rotation speed in the circumferential direction C is reduced. Moreover, in the first magnetic gear mechanism 1α, the first magnet 11 has a ring shape where the plurality of first magnetic poles 111 are disposed in the circumferential direction C and the plurality of first magnetic poles 111 are integrally formed. Therefore, in the first magnetic gear mechanism 1α, the pitch of the plurality of first magnetic poles 111 in the circumferential direction C can be reduced, and thus the torque can be increased, as compared with, for example, a magnetic gear device (for example, a device described in JP 2022-150601 A) including a ring-shaped first magnet formed by coupling a plurality of magnets formed individually.

Further, in the first magnetic gear mechanism 1α, the first magnet 11 and the first pole piece 13 are not in contact with each other in the radial direction R, and the first pole piece 13 and the second magnet 12 are not in contact with each other in the radial direction R. Moreover, in the first magnetic gear mechanism 1α, the first pole piece 13 is disposed between the first magnet 11 and the second magnet 12 in the radial direction R, and the first magnet 11 and the second magnet 12 are magnetically coupled to each other by the first pole piece 13. Therefore, when torque equal to or greater than the maximum transmission torque set by the magnetic force of the second magnetic poles 121 and the gap between the second magnet 12 and the first pole piece 13 in the radial direction R is applied to the first magnetic gear mechanism 1α, the first magnetic gear mechanism 1α functions as a torque limiter, and the rotation of the first magnet 11 in the circumferential direction C is stopped even in a state where the second magnet 12 is rotating in the circumferential direction C. Therefore, the first magnetic gear mechanism 1α can protect the motor 2 by separating the driving side and the driven side from each other at the time of overload. Alternatively, when unintended torque is generated by the motor 2, the first magnetic gear mechanism 1α functions as a torque limiter, and can protect the load side by separating the driving side and the driven side from each other. In addition, when the magnetic gear device 1 is used in an electric opening/closing mechanism of a home electric appliance, the magnetic gear device 1 can block the torque from the driving side when a load-side member comes into contact with a human body, and thus can also serve as a safety device to minimize the effect on the human body.

The third magnet 14 is provided to be rotatable about the axis 17o with respect to the frame and the second pole piece 16. Moreover, a third space S3 is formed between the third magnet 14 and the second pole piece 16 in the radial direction R. In other words, the third magnet 14 is provided to be rotatable about the axis 17o in a non-contact state with respect to the second pole piece 16. The third magnet 14 is formed similarly to the first magnet 11. That is, the third magnet 14 includes a plurality of (fifty two) third magnetic poles 141 disposed in the circumferential direction C, and the plurality of third magnetic poles 141 are integrally formed in a ring shape. The plurality of third magnetic poles 141 are disposed such that the N poles and the S poles are alternately arranged in the circumferential direction C. In addition, the third magnet 14 is provided with a third back yoke 142 provided, for example, at the outer side in the radial direction R. The third space S3 may be filled with a non-magnetic material such as a resin sliding material as long as the third magnet 14 and the second pole piece 16 are allowed to rotate in a case where the third space S3 is in a vacuum state, a case where a fluid such as air, water, or oil is present, or the like.

The fourth magnet 15 is provided to be rotatable about the axis 17o with respect to the frame and the second pole piece 16. Moreover, a second space S2 is formed between the fourth magnet 15 and the second pole piece 16 in the radial direction R. In other words, the fourth magnet 15 is provided to be rotatable about the axis 17o in a non-contact state with respect to the second pole piece 16. The fourth magnet 15 is formed similarly to the first magnet 11. That is, the fourth magnet 15 includes a plurality of (six) fourth magnetic poles 151 disposed in the circumferential direction C, and the plurality of fourth magnetic poles 151 are integrally formed in a ring shape. The plurality of fourth magnetic poles 151 are disposed such that the N poles and the S poles are alternately arranged in the circumferential direction C. In addition, the fourth magnet 15 is provided with, for example, a fourth back yoke 152 provided at the inner side in the radial direction R. In the magnetic gear mechanism 1β according to the present embodiment, the third magnet 14 and the fourth magnet 15 are disposed so as to be rotatable about the common axis 17o. The fourth space S4 may be filled with a non-magnetic material such as a resin sliding material as long as the fourth magnet 15 and the second pole piece 16 are allowed to rotate in a case where the fourth space S4 is in a vacuum state, a case where a fluid such as air, water, or oil is present, or the like.

The second pole piece 16 is constituted by a plurality of (for example, twenty nine) second modulation pieces 161, and modulates the magnetic flux of the magnets 14 and 15. The second pole piece 16 is located between the third magnet 14 and the fourth magnet 15 in the radial direction R, and magnetically couples the third magnet 14 and the fourth magnet 15. The second modulation pieces 161 are each formed of, for example, a magnetic body, are arranged at equal intervals along the circumferential direction C, and are fixed to a frame (not illustrated).

The second shaft 17 is a so-called shaft, and is formed of, for example, a metal member in a circular column shape or a cylindrical shape. The second shaft 17 has an axis 17o, and is provided to be rotatable about the axis 17o with respect to the frame. The second shaft 17 is formed integrally with the third back yoke 142, for example, and rotates in the circumferential direction C together with the third magnet 14. The magnetic gear device 1C outputs torque to the outside by the second shaft 17 rotating in the circumferential direction C about the axis 17o.

In the magnetic gear device 1C according to the present embodiment, the first back yoke 111 and the fourth back yoke 152 are integrally formed.

Moreover, in the magnetic gear device 1C, the first magnet 11 and the fourth magnet 15 are integrally formed. In other words, in the magnetic gear device 1C, the first magnet 11 and the fourth magnet 15 are coupled in the axial direction A, and the fourth magnet 15 rotates together with the first magnet 11. When the first magnet 11 and the fourth magnet 15 are described more specifically, the first magnet 11 is formed at one side in the axial direction A and the fourth magnet 15 is formed at the other side in the axial direction A using a ring-shaped magnetic body, by magnetizing the magnetic body as described above. At this time, as a result, an intermediate part IM1 not magnetized is formed between the first magnet 11 and the fourth magnet 15 in the axial direction A.

In the axial direction A of the magnetic gear device 1C, the second magnet 12 and the third magnet 14 are disposed to be opposed to each other with a fifth space S5 interposed so as not to be affected by the magnetic force of each other.

In the second magnetic gear mechanism 1β, the third magnet 14, the fourth magnet 15, and the second pole piece 16 are formed individually.

In the second magnetic gear mechanism 1β, the third magnet 14 is disposed at the outer side in the radial direction R, and the fourth magnet 15 is disposed at the inner side of the third magnet 14 in the radial direction R.

The second magnetic gear mechanism 1β is a so-called flux-modulated magnetic gear (harmonic type magnetic gear device). In the second magnetic gear mechanism 1β, when the fourth magnet 15 formed integrally with the first magnet 11 rotates in the circumferential direction XC about the axis 17o together with the first magnet 11, changes in the magnetic fluxes of the plurality of fourth magnetic poles 151 are modulated by the second pole piece 16 and transmitted to the third magnetic poles 141 of the third magnet 14 coupled to the driven side, thus rotating the third magnet 14 about the axis 17o.

In the second magnetic gear mechanism 1 β, the number of the third magnetic poles 141 of the third magnet 14 disposed at the outer side of the fourth magnet 15 in the radial direction R is larger than the number of the fourth magnetic poles 151 of the fourth magnet 15, and therefore when the second magnetic gear mechanism 1β is operated, the torque can be increased although the rotation speed in the circumferential direction C is reduced. That is, the magnetic gear device 1C according to the present embodiment can increase torque by the two stages of magnetic gear mechanisms 1α and 1β. Moreover, in the second magnetic gear mechanism 1β, the third magnet 14 has a ring shape where the plurality of third magnetic poles 141 are disposed in the circumferential direction C and the plurality of third magnetic poles 141 are integrally formed. Therefore, in the second magnetic gear mechanism 1β, the pitch of the plurality of third magnetic poles 141 in the circumferential direction C can be reduced, and thus the torque can be increased, as compared with, for example, a magnetic gear device (for example, a device described in JP 2022-150601 A) including a ring-shaped first magnet formed by coupling a plurality of magnets formed individually.

In the second magnetic gear mechanism 1β, the third magnet 14 and the second pole piece 16 are not in contact with each other in the radial direction R, and the second pole piece 16 and the fourth magnet 15 are not in contact with each other in the radial direction R. Moreover, in the second magnetic gear mechanism 1β, the second pole piece 16 is disposed between the third magnet 14 and the fourth magnet 15 in the radial direction R, and the third magnet 14 and the fourth magnet 15 are magnetically coupled to each other by the second pole piece 16. Therefore, when torque equal to or greater than the maximum transmission torque set by the magnetic force of the fourth magnetic poles 151 and the gap between the fourth magnet 15 and the second pole piece 16 in the radial direction R is applied to the second magnetic gear mechanism 1β, the second magnetic gear mechanism 1β functions as a torque limiter, and the rotation of the third magnet 14 in the circumferential direction C is stopped even in a state where the fourth magnet 15 is rotating in the circumferential direction C. Therefore, the second magnetic gear mechanism 1β can protect the motor 2 by separating the driving side and the driven side from each other at the time of overload. Alternatively, when unintended torque is generated by the motor 2, the second magnetic gear mechanism 1β functions as a torque limiter, and can protect the load side by separating the driving side and the driven side from each other. In addition, when the magnetic gear device 1 is used in an electric opening/closing mechanism of a home electric appliance, the magnetic gear device 1 can block the torque from the driving side when a load-side member comes into contact with a human body, and thus can also serve as a safety device to minimize the effect on the human body.

In the first magnetic gear mechanism 1α according to the present embodiment, the number of the second magnetic poles 121 of the second magnet 12 located at the input side is six, and the number of the second magnetic poles 121 of the first magnet 11 located at the output side is fifty two. Therefore, a reduction ratio X1 of the first magnetic gear mechanism 1α is calculated as follows. $X 1 = \left(52/2\right) / \left(6/2\right) = 8.67$

In the second magnetic gear mechanism 1β according to the present embodiment, the number of the fourth magnetic poles 151 of the fourth magnet 15 located at the input side is six, and the number of the third magnetic poles 141 of the third magnet 14 located at the output side is fifty two. Therefore, a reduction ratio X2 of the second magnetic gear mechanism 1β is calculated as follows. $X 2 = \left(52/2\right) / \left(6/2\right) = 8.67$

Thus, the reduction ratio of the magnetic gear device 1C according to the present embodiment is calculated as follows. $8.67 \times 8.67 = 75.2$

As described above, the magnetic gear device 1C according to the present embodiment has the following configuration. The magnetic gear device 1C includes a ring-shaped first magnet 11 including a plurality of first magnetic poles 111 disposed in the circumferential direction C, a ring-shaped second magnet 12 including a plurality of second magnetic poles 121 disposed in the circumferential direction C, a first pole piece 13 located between the first magnet 11 and the second magnet 12 in the radial direction R and magnetically coupling the first magnet 11 and the second magnet 12, a ring-shaped third magnet 14 including a plurality of third magnetic poles 141 disposed in the circumferential direction C, a ring-shaped fourth magnet 15 including a plurality of fourth magnetic poles 151 disposed in the circumferential direction C, and a second pole piece 16 located between the third magnet 14 and the fourth magnet 15 in the radial direction R and magnetically coupling the third magnet 14 and the fourth magnet 15. In the magnetic gear device 1C, the first magnet 11 and the fourth magnet 15 are coupled in the axial direction A, the fourth magnet 15 rotates together with the first magnet 11, the number of the first magnetic poles 111 of the first magnet 11 is larger than the number of the second magnetic poles 121 of the second magnet 12, and the number of the third magnetic poles 141 of the third magnet 14 is larger than the number of the fourth magnetic poles 151 of the fourth magnet 15. Moreover, in the magnetic gear device 1C, at least one of the four of the first magnet 11 to the fourth magnet 15 has a ring shape. Therefore, with the magnetic gear device 1C according to the present embodiment, the torque of the second shaft 17 (output-side torque) can be increased to be more than the torque of the first shaft 22 (input-side torque). Moreover, in the magnetic gear device 1C according to the present embodiment, the first magnet 11 and the first pole piece 13 are not in contact with each other in the radial direction R, the first pole piece 13 and the second magnet 12 are not in contact with each other in the radial direction R, the third magnet 14 and the second pole piece 16 are not in contact with each other in the radial direction R, and the second pole piece 16 and the fourth magnet 15 are not in contact with each other in the radial direction R, making it possible to reduce the sound generated during driving, to prevent the generation of dust due to use, and to eliminate the need to use a lubricant. In addition, since the magnetic gear device 1C does not generate dust due to use and eliminates the need to use a lubricant for the use, it is not necessary to perform maintenance. Further, in the magnetic gear device 1C according to the present embodiment, the plurality of first magnetic poles 111 of the first magnet 11 and the plurality of second magnetic poles 121 of the second magnet 12 are magnetically coupled with the first pole piece 13 interposed in the radial direction R, and the plurality of third magnetic poles 141 of the third magnet 14 and the plurality of fourth magnetic poles 151 of the fourth magnet 15 are magnetically coupled with the second pole piece 16 interposed in the radial direction R, and thus the torque density can be increased, as compared with a magnetic gear device where the outer peripheral surface of the ring-shaped first magnet and the outer peripheral surface of the ring-shaped second magnet are opposed to each other and are magnetically coupled only by the opposed magnets.

In the magnetic gear device 1C according to the present embodiment, the first magnet 11 includes the plurality of first magnetic poles 111 integrally formed, and the third magnet 14 includes the plurality of third magnetic poles 141 integrally formed. Therefore, the size and weight can be reduced as compared with a magnetic gear device including a ring-shaped magnet formed by coupling individually formed magnets in the circumferential direction C. Moreover, since the magnetic gear device 1C includes the first magnet 11 and the third magnet 14 having the above configuration, the number of components can be reduced, the shapes of the back yokes 112, 122, 142, and 152 and/or the frame can be simplified, and it is not necessary to provide a cover for preventing the first magnetic poles 111 and the third magnetic poles 141 from falling off. In addition, in the first magnet 11, the pitch of the plurality of first magnetic poles 111 in the circumferential direction C is small, and therefore the torque ripple can be reduced, and in the third magnet 14, the pitch of the plurality of third magnetic poles 141 in the circumferential direction C is small, and therefore the torque ripple can be reduced.

In the magnetic gear device 1C according to the present embodiment, the first magnet 11 and the fourth magnet 15 are integrally formed. Therefore, with the magnetic gear device 1C according to the present embodiment, it is possible to improve workability at the time of assembly by reducing the number of components as compared with a magnetic gear device including the first magnet 11 and the fourth magnet 15 separately formed.

Since the magnetic gear device 1 according to the present embodiment has the above-described functions and effects, the magnetic gear device 1 can be applied to, for example, a device used in a clean room where dust generation or the like is unfavorable, a device used under a special environment such as the ocean or the aerospace, a house facility or a home appliance requiring safety assurance upon contact with a human body or countermeasures against overload, an electric generator utilizing high efficiency, and the like. More specifically, the magnetic gear device 1 can be applied to a robot arm, a semiconductor manufacturing device, an electric opening/closing mechanism or an electronic lock of a home electric appliance, a cooling pump of an air conditioner or the like, a cooling fan, and the like.

In the magnetic gear device 1C according to the present embodiment, the first magnet 11 is disposed at the inner side of the second magnet 12 in the radial direction R. In the magnetic gear device 1 according to the present embodiment, the ring-shaped first magnet 11 including the plurality of first magnetic poles 111 integrally formed is formed by magnetizing the magnetic body as described above, and thus the ring-shaped first magnet 11 can be disposed even at a small pitch at the inner side in the radial direction R. The third magnet 14 is disposed at the outer side of the fourth magnet 15 in the radial direction R.

Although the magnetic gear device 1C described above includes the first magnet 11 and the fourth magnet 15 integrally formed, the magnetic gear device 1C according to the present embodiment is not limited to such a configuration. For example, the first magnet 11 and the fourth magnet 15 may be formed individually, a separate ring-shaped coupling part may be formed instead of the intermediate part IM1, and the first magnet 11 and the fourth magnet 15 may be coupled in the axial direction A with the coupling part interposed.

In the magnetic gear device 1C described above, the input and the output may be arranged in reverse. In this case, at the output side, the speed (the rotation speed of the output shaft in the circumferential direction C) can be increased, although the torque is reduced.

Further, in the first magnetic gear mechanism 1α of the magnetic gear device 1C according to the above-described embodiment, the second magnet 12 is used as the input side, the first pole piece 13 is fixed, the second pole piece 16 is fixed, and the third magnet 14 is used as the output side. However, the magnetic gear device 1 according to the present embodiment is not limited to such a configuration. For example, as indicated in Table 2, the input side, the output side, and the fixed members can be changed as appropriate.

### Table 2

**(Table 2)**

| [Second embodiment] | | | | | | | | | | | |
|---|---|---|---|---|---|---|---|---|---|---|---|
| | | | | Used as speed reducer | | | | Used as speed increaser | | | |
| | | | | [First embodiment] | Another example | Another example | Another example | Another example | Another example | Another example | Another example |
| First stage (high-speed side) | Outer side | Second ring magnet | 12 | Input side | Fixed | Input side | Fixed | Output side | Fixed | Output side | Fixed |
| | PP | First pole piece | 13 | Fixed | Input side | Fixed | Input side | Fixed | Output side | Fixed | Output side |
| | Inner side | First ring magnet | 11 | Intermediate rotation part | Intermediate rotation part | Intermediate rotation part | Intermediate rotation part | Intermediate rotation part | Intermediate rotation part | Intermediate rotation part | Intermediate rotation part |
| Second stage (low-speed side) | Inner side | Fourth ring magnet | 15 | | | | | | | | |
| | PP | Second pole piece | 16 | Fixed | Fixed | Output side | Output side | Fixed | Input side | Input side | Input side |
| | Outer side | Third ring magnet | 14 | Output side | Output side | Fixed | Fixed | Input side | Output side | Fixed | Fixed |

| | |
|---|---|
| * When the number of magnets of multipole magnet (11) is less than the number of poles of PP (13) | * When the number of magnets of multipole magnet (11) is less than the number of poles of PP (13) |

In the above-described embodiment, the power transmission device 100C includes the magnetic gear device 1C and the motor 2. However, the power transmission device 100C according to the present embodiment is not limited to such a configuration. For example, the intermediate transmission mechanism 3 constituted by a mechanical gear may be disposed between the motor 2 and the magnetic gear device 1C. Further, the motor 2 may be replaced with an electric generator. The drive source may be other than the motor 2.

Further, the magnets 11, 12, 14, and 15 are provided with the back yokes 112, 122, 142, and 152, respectively. However, the back yokes 112, 122, 142, and 152 do not necessarily have the function of the back yoke, and it is sufficient that the magnets 11, 12, 14, and 15 and other components can be connected (fixed).

In the magnetic gear device 1C according to the above-described embodiment, the first magnet 11 includes fifty-two (twenty-six pole pairs of) first magnetic poles 111. However, the number of the first magnetic poles 111 of the first magnet 11 according to the present embodiment is not limited to such a number, and can be set to any number. The same applies to the third magnet 14.

Further, in the magnetic gear device 1C according to the above-described embodiment, the second magnet 12 includes six (three pole pairs of) second magnetic poles 121. However, the number of the second magnetic poles 121 of the second magnet 12 according to the present embodiment is not limited to such a number, and can be set to any number. The same applies to the fourth magnet 15.

In the magnetic gear device 1C according to the above-described embodiment, the first pole piece 13 is constituted by twenty-nine first modulation pieces 131. However, the number of the first modulation pieces 131 constituting the first pole piece 13 according to the present embodiment is not limited to such a number, and can be set to any number. When two of the number of the first magnetic poles 111 of the first magnet, the number of the second magnetic poles 121 of the second magnet, and the number of the modulation pieces 131 of the first pole piece 13 are determined to be desired numbers, the one remaining number is appropriately set according to the two other numbers. The same applies to the second pole piece 16.

In the magnetic gear device 1C according to the above-described embodiment, the second magnet 12 includes the plurality of second magnetic poles 121 disposed in the circumferential direction C, and the plurality of second magnetic poles 121 are integrally formed in a ring shape. However, the second magnet 12 according to the present embodiment can also be formed by joining a plurality of magnets each formed in an arc shape and having two second magnetic poles 121. The same applies to the first magnet 11, the third magnet 14, and the fourth magnet 15.

Further, in the magnetic gear device 1C according to the above-described embodiment, the two stages of magnetic gear mechanisms 1α and 1β are arranged in the axial direction A. However, the magnetic gear device 1C according to the present embodiment is not limited to such a configuration. For example, the magnetic gear device 1C may include three or more stages of magnetic gear mechanisms arranged in the axial direction A.

In the magnetic gear device 1C according to the above-described embodiment, the input shaft and the output shaft can be replaced with each other by, for example, coupling the first shaft 22 of the motor 2 to the third magnet 14 to be used as the input shaft, and using the second magnet 12 as the output shaft. In this case, the torque is reduced, while the speed can be increased. In the first magnetic gear mechanism 1α in this case, when the first magnet 11 at the inner side in the radial direction R is used for the input, the second magnet 12 at the outer side in the radial direction R is used for the output, and the first pole piece 13 is fixed, a speed increase ratio X3 can be calculated as follows. $X 3 = 11 M / 12 M = 26 / 3 = 8.67$

Alternatively, in the first magnetic gear mechanism 1α in this case, when the first pole piece 13 is used for the output, the first magnet 11 is used for the input, and the second magnet 12 is fixed, a speed increase ratio X4 can be calculated as follows. $X 4 = 13 M / 12 M = 29 / 3 = 9.67$

In addition, for example, in the magnetic gear mechanism 1α according to the above-described embodiment, when the first magnet 11 and the second magnet 12 are exchanged, the first magnet 11 is located at the outer side in the radial direction R, the second magnet 12 is located at the inner side in the radial direction R, the first shaft 22 of the motor 2 is coupled to the second magnet 12 to be used as the input shaft, the first magnet 11 is used as the output shaft, and the first pole piece 13 is fixed, a reduction ratio X5 can be calculated as follows. $X 5 = 11 M / 12 M = 26 / 3 = 8.67$

Alternatively, in the first magnetic gear mechanism 1α in this case, when the first pole piece 13 is used for the output, the first magnet 11 is fixed, and the second magnet 12 is used for the input, a reduction ratio X6 can be calculated as follows. $X 6 = 13 M / 12 M = 29 / 3 = 9.67$

### First Modified Example of Second Embodiment

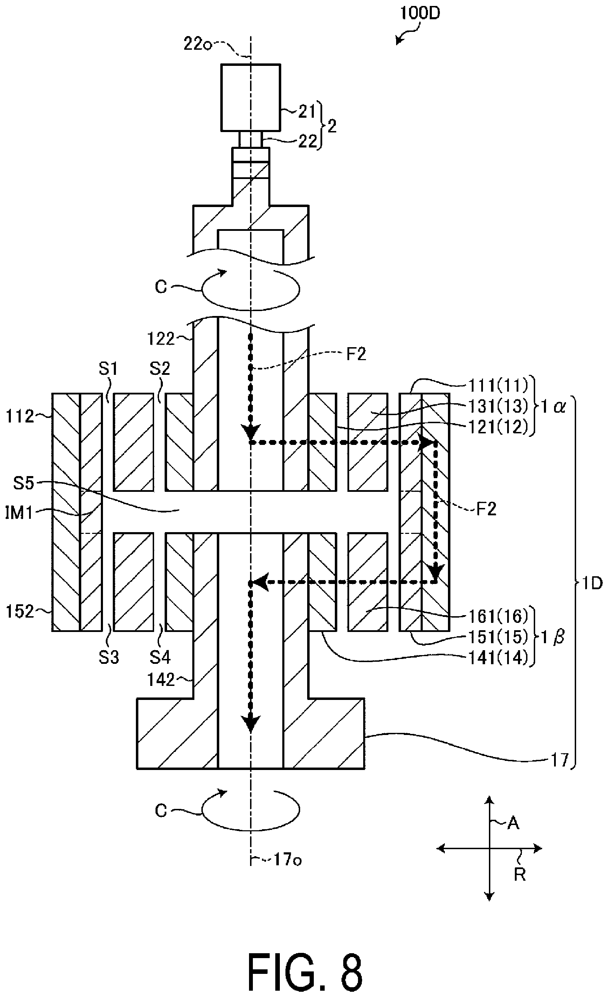

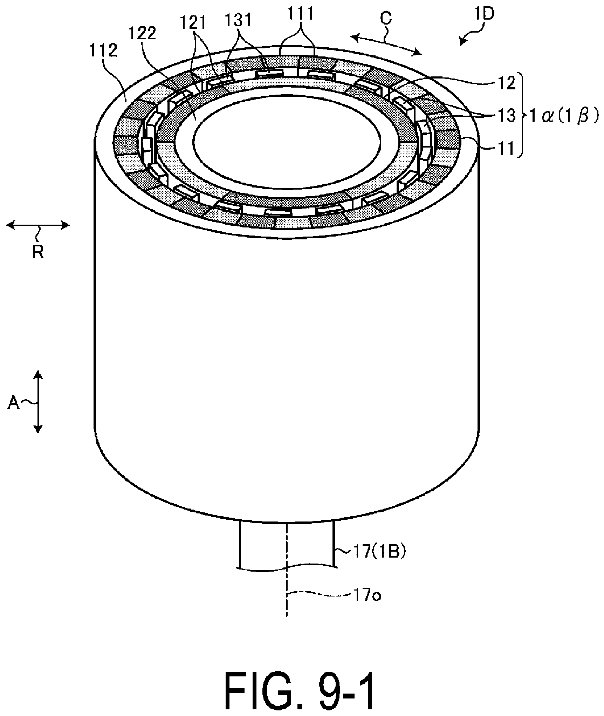

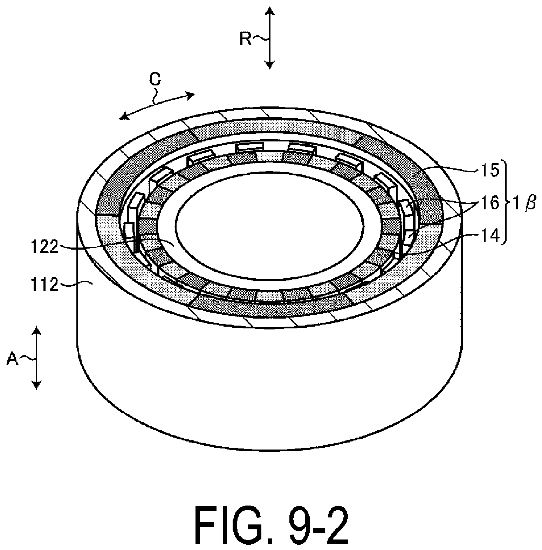

Next, a magnetic gear device 1D according to a first modified example of the second embodiment will be described with reference to FIGS. 8, 9-1, and 9-2. FIG. 8 is a cross-sectional view of a power transmission device 100D including a magnetic gear device 1D according to a first modified example of the second embodiment. FIG. 9-1 is a perspective view of the magnetic gear device 1D illustrated in FIG. 8. FIG. 9-2 is a perspective view of the magnetic gear device illustrated in FIG. 8, illustrating the other side in the axial direction A. Note that in the configuration of the magnetic gear device 1D according to the first modified example of the second embodiment, the same components as the components of the magnetic gear device 1C according to the second embodiment are denoted by the same reference numerals and the description of such components is omitted. For convenience of illustration, the motor 2 is omitted in FIGS. 9-1 and 9-2. Further, in FIG. 8, the transmission path of the driving force of the motor 2 is indicated by arrows F2.

The power transmission device 100D includes, for example, a magnetic gear device 1D and a motor 2.

The magnetic gear device 1D includes a first magnetic gear mechanism 1α and a second magnetic gear mechanism 1β. Further, the magnetic gear device 1D is provided with a second shaft 17. The magnetic gear device 1 is a device including the first magnetic gear mechanism 1α and the second magnetic gear mechanism 1β coupled in the axial direction A.

The first magnetic gear mechanism 1α includes a first magnet 11, a second magnet 12, and a first pole piece 13.

The first magnet 11 is disposed at the outer side of the second magnet 12 in the radial direction R in the first magnetic gear mechanism 1α. The first back yoke 112 is disposed at the outer side of the first magnet 11 in the radial direction R. The first magnet 11 according to the present modified example is disposed at the output side (driven side) with respect to the second magnet 12.

In the first magnetic gear mechanism 1α, the second magnet 12 is disposed at the inner side of the first magnet 11 in the radial direction R, and the first shaft 22 is fixed to the tip end of the second back yoke 122 in the axial direction A. That is, the second magnet 12 according to the present modified example is disposed at the input side (driving side) with respect to the first magnet 11.

The second magnetic gear mechanism 1β is constituted by a third magnet 14, a fourth magnet 15, and a second pole piece 16.

The third magnet 14 is disposed at the inner side of the fourth magnet 15 in the radial direction R in the second magnetic gear mechanism 1β. The third back yoke 142 is disposed at the inner side of the third magnet 14 in the radial direction R. The third back yoke 142 is coupled to the second shaft 17. That is, the third magnet 14 according to the present modified example is disposed at the output side (driven side) with respect to the fourth magnet 15. The third back yoke 142 is coupled to the second shaft 17.

In the second magnetic gear mechanism 1β, the fourth magnet 15 is disposed at the outer side of the third magnet 14 in the radial direction R, and the fourth back yoke 152 is disposed at the outer side of the fourth magnet 15 in the radial direction R. The fourth magnet 15 according to the present modified example is disposed at the input side (driving side) with respect to the third magnet 14.

In the power transmission device 100D according to the present modified example, when the first shaft 22 is rotated in the circumferential direction C by driving the motor 2, the second back yoke 122 and the second magnet 12 fixed to the first shaft 22 rotate in the circumferential direction C together with the first shaft 22. The change in the magnetic flux of the second magnetic poles 121 of the second magnet 12 is modulated by the first pole piece 13 and transmitted to the first magnetic poles 111 of the first magnet 11. Therefore, the first magnet 11 rotates in the circumferential direction C together with the rotation of the second magnet 12 in the circumferential direction C. Since the first magnet 11 and the fourth magnet 15 are integrally formed, the fourth magnet 15 rotates in the circumferential direction C together with the rotation of the first magnet 11 in the circumferential direction C. The change in the magnetic flux of the fourth magnetic poles 151 of the fourth magnet 15 is modulated by the second pole piece 16 and transmitted to the third magnetic poles 141 of the third magnet 14. Since the second shaft 17 is fixed to the third magnet 14, the second shaft 17 rotates in the circumferential direction C together with the rotation of the third magnet 14 in the circumferential direction C.

In the magnetic gear device 1D according to the present modified example, the first magnet 11 is disposed at the outer side of the second magnet 12 in the radial direction R, and the third magnet 14 is disposed at the inner side of the fourth magnet 15 in the radial direction R. The magnetic gear device 1D according to the present modified example has the same functions and effects as the magnetic gear device 1 according to the second embodiment.

In the magnetic gear device 1D according to the above-described modified example, the two stages of magnetic gear mechanisms 1α and 1β are arranged in the axial direction A. However, the magnetic gear device 1D according to the present modified example is not limited to such a configuration. For example, the magnetic gear device 1D may include three or more stages of magnetic gear mechanisms arranged in the axial direction A.

Further, in the magnetic gear device 1D according to the above-described modified example, the second magnet 12 is used as the input side, the first pole piece 13 is fixed, the second pole piece 16 is fixed, and the third magnet 14 is used as the output side. However, the magnetic gear device 1D according to the present modified example is not limited to such a configuration. For example, as indicated in Table 3, the input side, the output side, and the fixed members can be changed as appropriate.

### Table 3

**(Table 3)**

| First modified example of second embodiment | | | | | | | | | | | |
|---|---|---|---|---|---|---|---|---|---|---|---|
| | | | | Used as speed reducer | | | | Used as speed increaser | | | |
| | | | | First modified example of first embodiment | Another example | Another example | Another example | Another example | Another example | Another example | Another example |
| First stage (high-speed side) | Inner side | Second ring magnet | 12 | Input side | Fixed | Input side | Fixed | Output side | Fixed | Output side | Fixed |
| | PP | First pole piece | 13 | Fixed | Input side | Fixed | Input side | Fixed | Output side | Fixed | Output side |
| | Outer side | First ring magnet | 11 | Intermediate rotation part | Intermediate rotation part | Intermediate rotation part | Intermediate rotation part | Intermediate rotation part | Intermediate rotation part | Intermediate rotation part | Intermediate rotation part |
| Second stage (low-speed side) | Outer side | Fourth ring magnet | 15 | | | | | | | | |
| | PP | Second pole piece | 16 | Fixed | Fixed | Output side | Output side | Fixed | Input side | Input side | Input side |
| | Inner side | Third ring magnet | 14 | Output side | Output side | Fixed | Fixed | Input side | Output side | Fixed | Fixed |

| | |
|---|---|
| * When the number of magnets of multipole magnet (11) is less than the number of poles of PP (13) | * When the number of magnets of multipole magnet (11) is less than the number of poles of PP (13) |

### Third Embodiment

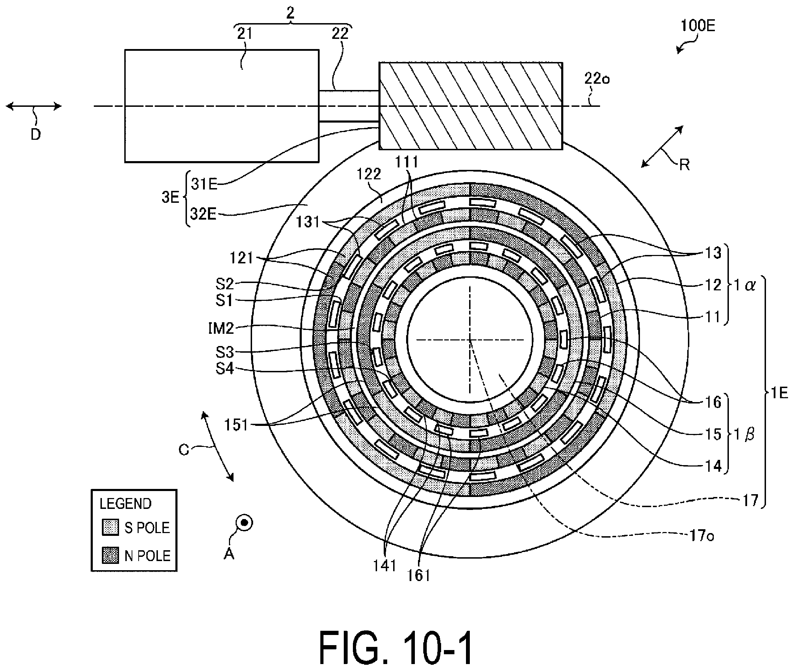

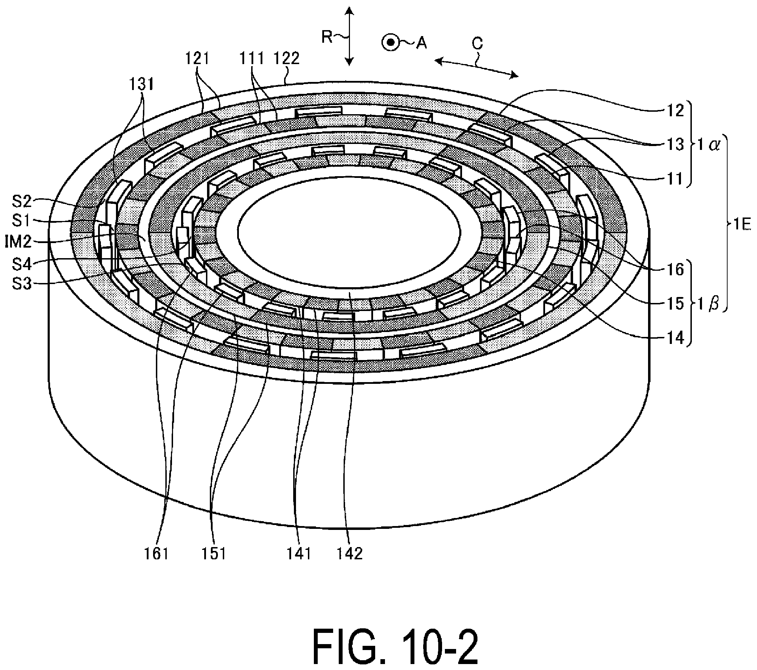

Next, a magnetic gear device 1E according to a third embodiment will be described with reference to FIGS. 10-1 and 10-2. FIG. 10-1 is a plan view of a power transmission device 100E including a magnetic gear device 1E according to a third embodiment.10-2. is a perspective view of the magnetic gear device 1E illustrated in FIG. 10-1. Note that in the configuration of the power transmission device 100E according to the third embodiment, the same components as the components of the power transmission device 100 according to the second embodiment are denoted by the same reference numerals and the description of such components is omitted. In FIG. 10-2, the motor 2 and the intermediate transmission mechanism 3E are omitted.

The power transmission device 100E according to the present embodiment includes a motor 2, an intermediate transmission mechanism 3E, and a magnetic gear device 1E.

The intermediate transmission mechanism 3E includes, for example, a first gear 31E as a worm and a second gear 32E as a worm wheel.

The first gear 31B is fixed to a tip end part of the first shaft 22 in the first direction D, and rotates together with the rotation of the first shaft 22.

The second gear 32E is coupled to the outer peripheral surface of the second back yoke 122 of the second magnet 12 so as to rotate in the circumferential direction C together with the second magnet 12 in the magnetic gear device 1E. The second gear 32E meshes with the first gear 31E. The intermediate transmission mechanism 3E according to the present embodiment is constituted by the first gear 31E and the second gear 32E of a mechanical type.

The magnetic gear device 1E includes a first magnetic gear mechanism 1α and a second magnetic gear mechanism 1β. The magnetic gear device 1E is provided with a second shaft 17. The magnetic gear device 1 is a device including the first magnetic gear mechanism 1α and the second magnetic gear mechanism 1β coupled in the radial direction R.

The first magnetic gear mechanism 1α includes a first magnet 11, a second magnet 12, and a first pole piece 13.

The first magnet 11 is disposed at the inner side of the second magnet 12 in the radial direction R in the first magnetic gear mechanism 1α. The first magnet 11 according to the present embodiment is not provided with a back yoke. The first magnet 11 according to the present embodiment is disposed at the output side (driven side) with respect to the second magnet 12.

The second magnet 12 is disposed at the outer side of the first magnet 11 in the radial direction R in the first magnetic gear mechanism 1α. The second back yoke 122 is disposed at the outer side of the second magnet 12 in the radial direction R, and the outer peripheral surface of the second back yoke 122 is fixed to the inner peripheral surface of the second gear 32E in the radial direction R. The second magnet 12 according to the present embodiment is disposed at the input side (driving side) with respect to the first magnet 11.

The second magnetic gear mechanism 1β is constituted by a third magnet 14, a fourth magnet 15, and a second pole piece 16.

The third magnet 14 is disposed at the inner side of the fourth magnet 15 in the radial direction R in the second magnetic gear mechanism 1β. The third back yoke 142 is disposed at the inner side of the third magnet 14 in the radial direction R, and the inner peripheral surface of the third back yoke 142 is fixed to the outer peripheral surface of the second shaft 17 in the radial direction R. That is, the third magnet 14 according to the present embodiment is disposed at the output side (driven side) with respect to the fourth magnet 15.

The fourth magnet 15 is disposed at the inner side of the third magnet 14 in the radial direction R in the second magnetic gear mechanism 1β. The fourth magnet 15 according to the present embodiment is not provided with a back yoke. The fourth magnet 15 according to the present embodiment is disposed at the input side (driving side) with respect to the third magnet 14. In the magnetic gear device 1E according to the present embodiment, the first magnet 11, the second magnet 12, the third magnet 14, and the fourth magnet 15 are disposed so as to be rotatable about the common axis 17o.

In the power transmission device 100E according to the present embodiment, the first magnet 11 and the fourth magnet 15 are integrally formed. In other words, in the magnetic gear device 1, the first magnet 11 and the fourth magnet 15 are coupled in the radial direction R, and the fourth magnet 15 rotates together with the first magnet 11. When the first magnet 11 and the fourth magnet 15 are described more specifically, the first magnet 11 is formed at the outer side in the radial direction R and the fourth magnet 15 is formed at the inner side in the radial direction R using a ring-shaped magnetic body, by magnetizing the magnetic body as described above. At this time, as a result, an intermediate part IM2 not magnetized is formed between the first magnet 11 and the fourth magnet 15 in the radial direction R.

In the power transmission device 100E according to the present embodiment, when the second gear 32E is rotated in the circumferential direction C by driving the motor 2, the second back yoke 122 and the second magnet 12 fixed to the second gear 32E rotate in the circumferential direction C together with the second gear 32E. The change in the magnetic flux of the second magnetic poles 121 of the second magnet 12 is modulated by the first pole piece 13 and transmitted to the first magnetic poles 111 of the first magnet 11. Therefore, the first magnet 11 rotates in the circumferential direction C together with the rotation of the second magnet 12 in the circumferential direction C. Since the first magnet 11 and the fourth magnet 15 are integrally formed, the fourth magnet 15 rotates in the circumferential direction C together with the rotation of the first magnet 11 in the circumferential direction C. The change in the magnetic flux of the fourth magnetic poles 151 of the fourth magnet 15 is modulated by the second pole piece 16 and transmitted to the third magnetic poles 141 of the third magnet 14. Therefore, the third magnet 14 rotates in the circumferential direction C together with the rotation of the fourth magnet 15 in the circumferential direction C. Since the second shaft 17 is fixed to the third magnet 14, the second shaft 17 rotates in the circumferential direction C together with the rotation of the third magnet 14 in the circumferential direction C.

The magnetic gear device 1E of the power transmission device 100E according to the present embodiment has the following configuration. The magnetic gear device 1E includes a ring-shaped first magnet 11 including a plurality of first magnetic poles 111 disposed in the circumferential direction C, a ring-shaped second magnet 12 including a plurality of second magnetic poles 121 disposed in the circumferential direction C, a first pole piece 13 located between the first magnet 11 and the second magnet 12 in the radial direction R and magnetically coupling the first magnet 11 and the second magnet 12, a ring-shaped third magnet 14 including a plurality of third magnetic poles 141 disposed in the circumferential direction C, a ring-shaped fourth magnet 15 including a plurality of fourth magnetic poles 151 disposed in the circumferential direction C, and a second pole piece 16 located between the third magnet 14 and the fourth magnet 15 and magnetically coupling the third magnet 14 and the fourth magnet 15. In addition, the first magnet 11 and the fourth magnet 15 are coupled in the radial direction R of the magnetic gear device 1E, the fourth magnet 15 rotates together with the first magnet 11, the number of the first magnetic poles 111 of the first magnet 11 is larger than the number of the second magnetic poles 121 of the second magnet 12, the number of the third magnetic poles 141 of the third magnet 14 is larger than the number of the fourth magnetic poles 151 of the fourth magnet 15, the plurality of first magnetic poles 111 of the first magnet 11 are integrally formed, the plurality of third magnetic poles 141 of the third magnet 14 are integrally formed, and at least one of the four of the first magnet 11 to the fourth magnet 15 has a ring shape. Therefore, with the power transmission device 100E according to the present embodiment, the torque of the second shaft 17 (output-side torque) can be increased to be more than the torque of the first shaft 22 (input-side torque). Moreover, the power transmission device 100E according to the present embodiment has the same functions and effects as the power transmission device 100 according to the second embodiment.

In the power transmission device 100E according to the present embodiment, the first magnet 11 and the fourth magnet 15 are integrally formed, and therefore it is possible to improve workability at the time of assembly by reducing the number of components as compared with a power transmission device including the first magnet 11 and the fourth magnet 15 separately formed.

In the power transmission device 100E according to the present embodiment, the first magnet 11 is disposed at the inner side of the second magnet 12 in the radial direction R, and the third magnet 14 is disposed at the inner side of the fourth magnet 15 in the radial direction R.

Although the power transmission device 100E described above includes the first magnet 11 and the fourth magnet 15 integrally formed, the power transmission device 100E according to the present embodiment is not limited to such a configuration. For example, the first magnet 11 and the fourth magnet 15 may be formed individually, a separate ring-shaped coupling part may be formed instead of the intermediate part IM2, and the first magnet 11 and the fourth magnet 15 may be coupled in the radial direction R with the coupling part interposed.

In the magnetic gear device 1E according to the above-described embodiment, the two stages of magnetic gear mechanisms 1α and 1β are arranged in the radial direction R. However, the magnetic gear device 1E according to the present embodiment is not limited to such a configuration. For example, the magnetic gear device 1E may include three or more stages of magnetic gear mechanisms arranged in the radial direction R. Further, a three-stage magnetic gear device can be configured by combining the magnetic gear device 1E according to the above-described embodiment and the magnetic gear device 1D.

Further, in the magnetic gear device 1B according to the above-described embodiment, the second magnet 12 is used as the input side, the first pole piece 13 is fixed, the second pole piece 16 is fixed, and the third magnet 14 is used as the output side. However, the magnetic gear device 1B according to the present embodiment is not limited to such a configuration. For example, as indicated in Table 4, the input side, the output side, and the fixed members can be changed as appropriate.

### [Table 4]

**(Table 4)**

| [Third embodiment] | | | | | | | | | | | |
|---|---|---|---|---|---|---|---|---|---|---|---|
| | | | | Used as speed reducer | | | | Used as speed increaser | | | |
| | | | | [Second embodiment] | Another example | Another example | Another example | Another example | Another example | Another example | Another example |
| First stage (high-speed side) | Outer side | Second ring magnet | 12 | Input side | Fixed | Input side | Fixed | Output side | Fixed | Output side | Fixed |
| | PP | First pole piece | 13 | Fixed | Input side | Fixed | Input side | Fixed | Output side | Fixed | Output side |
| | Inner side | First ring magnet | 11 | Intermediate rotation part | Intermediate rotation part | Intermediate rotation part | Intermediate rotation part | Intermediate rotation part | Intermediate rotation part | Intermediate rotation part | Intermediate rotation part |
| Second stage (low-speed side) | Outer side | Fourth ring magnet | 15 | | | | | | | | |
| | PP | Second pole piece | 16 | Fixed | Fixed | Output side | Output side | Fixed | Input side | Input side | Input side |
| | | Third ring magnet | 14 | Output side | Output side | Fixed | Fixed | Input side | Output side | Fixed | Fixed |

| | |
|---|---|
| * When the number of magnets of multipole magnet (11) is less than the number of poles of PP (13) | * When the number of magnets of multipole magnet (11) is less than the number of poles of PP (13) |

### First Modified Example of Third Embodiment

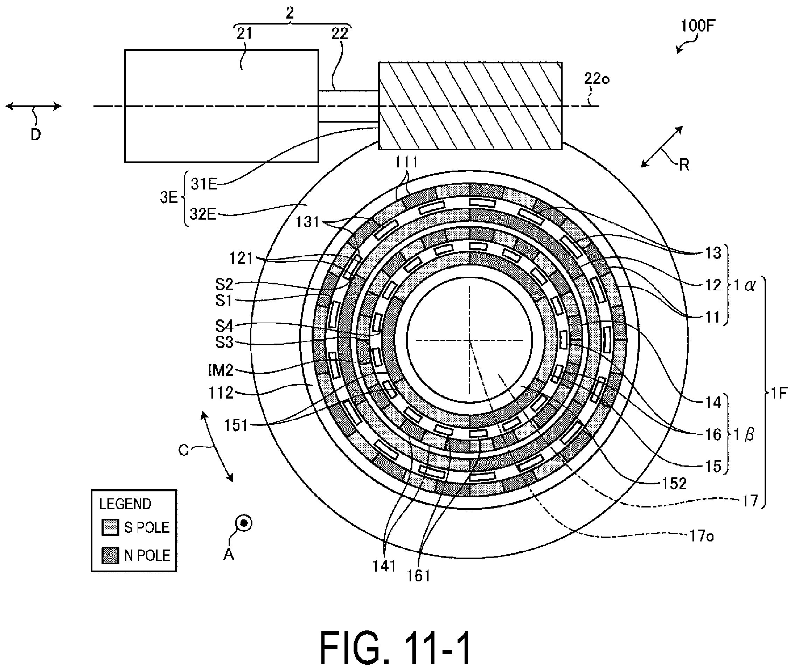

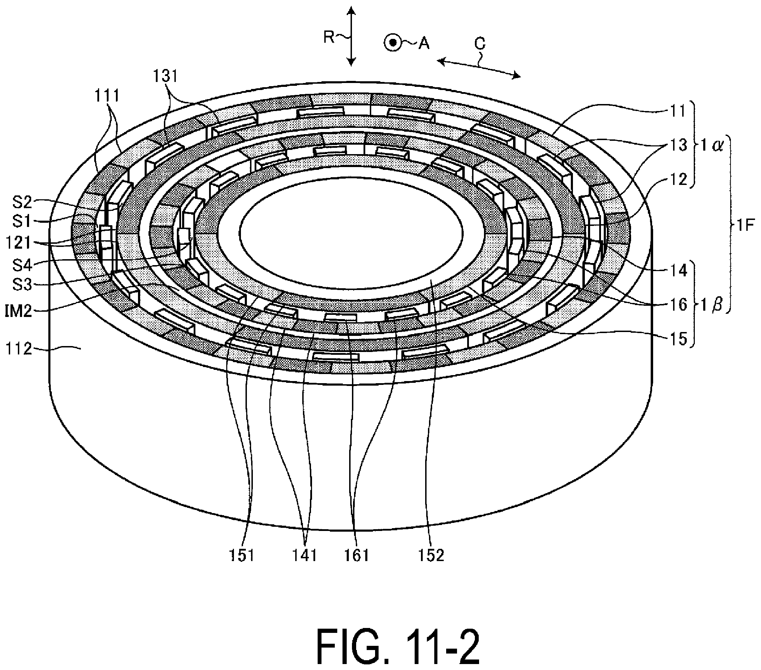

Next, a magnetic gear device 1F according to a first modified example of the third embodiment will be described with reference to FIGS. 11-1 and 11-2. FIG. 11-1 is a plan view of a power transmission device 100F including a magnetic gear device 1F according to a first modified example of the third embodiment. FIG. 11-2 is a perspective view of the magnetic gear device 1F illustrated in FIG. 11-1. Note that in the configuration of the power transmission device 100F according to the first modified example of the third embodiment, the same components as the components of the power transmission devices 100 and 100E described above are denoted by the same reference numerals and the description of such components is omitted. In FIG. 11-2, the motor 2 and the intermediate transmission mechanism 3E are omitted.

The power transmission device 100F according to the present modified example includes a motor 2, an intermediate transmission mechanism 3E, and a magnetic gear device 1F.

The magnetic gear device 1F includes a first magnetic gear mechanism 1α and a second magnetic gear mechanism 1β. The magnetic gear device 1F is provided with a second shaft 17. The magnetic gear device 1 is a device including the first magnetic gear mechanism 1α and the second magnetic gear mechanism 1β coupled in the radial direction R.

The first magnetic gear mechanism 1α includes a first magnet 11, a second magnet 12, and a first pole piece 13.

The first magnet 11 is disposed at the outer side of the second magnet 12 in the radial direction R in the first magnetic gear mechanism 1α. The first back yoke 112 is disposed at the outer side of the first magnet 11 in the radial direction R. The first magnet 11 according to the present modified example is disposed at the input side (driving side) with respect to the second magnet 12.

The second magnet 12 is disposed at the inner side of the first magnet 11 in the radial direction R in the first magnetic gear mechanism 1α. The second magnet 12 according to the present modified example is not provided with a back yoke. The second magnet 12 according to the present modified example is disposed at the output side (driven side) with respect to the first magnet 11.

The second magnetic gear mechanism 1β is constituted by a third magnet 14, a fourth magnet 15, and a second pole piece 16.

The third magnet 14 is disposed at the outer side of the fourth magnet 15 in the radial direction R in the second magnetic gear mechanism 1β. The third magnet 14 according to the present modified example is not provided with a back yoke. The third magnet 14 according to the present modified example is disposed at the input side (driving side) with respect to the fourth magnet 15.

In the second magnetic gear mechanism 1β, the fourth magnet 15 is disposed at the outer side of the third magnet 14 in the radial direction R, and the fourth back yoke 152 is disposed at the inner side of the fourth magnet 15 in the radial direction R. The fourth back yoke 152 is coupled to the second shaft 17. That is, the fourth magnet 15 according to the present modified example is disposed at the output side (driven side) with respect to the third magnet 14. In the magnetic gear device 1F according to the present embodiment, the first magnet 11, the second magnet 12, the third magnet 14, and the fourth magnet 15 are disposed so as to be rotatable about the common axis 17o.

In the power transmission device 100F according to the present modified example, the second magnet 12 and the third magnet 14 are integrally formed. In other words, in the magnetic gear device 1F, the second magnet 12 and the third magnet 14 are coupled in the radial direction R, and the third magnet 14 rotates together with the second magnet 12. When the second magnet 12 and the third magnet 14 are described more specifically, the second magnet 12 is formed at the outer side in the radial direction R and the third magnet 14 is formed at the inner side in the radial direction R using a ring-shaped magnetic body, by magnetizing the magnetic body as described above. At this time, as a result, an intermediate part IM2 not magnetized is formed between the second magnet 12 and the third magnet 14 in the radial direction R.

In the power transmission device 100F according to the present modified example, when the second gear 32E is rotated in the circumferential direction C by driving the motor 2, the first back yoke 112 and the first magnet 11 fixed to the second gear 32E rotate in the circumferential direction C together with the second gear 32E. The change in the magnetic flux of the first magnetic poles 111 of the first magnet 11 is modulated by the first pole piece 13 and transmitted to the second magnetic poles 121 of the second magnet 12. Therefore, the second magnet 12 rotates in the circumferential direction C together with the rotation of the first magnet 11 in the circumferential direction C. Since the second magnet 12 and the third magnet 14 are integrally formed, the third magnet 14 rotates in the circumferential direction C together with the rotation of the second magnet 12 in the circumferential direction C. The change in the magnetic flux of the third magnetic poles 141 of the third magnet 14 is modulated by the second pole piece 16 and transmitted to the fourth magnetic poles 151 of the fourth magnet 15. Therefore, the fourth magnet 15 rotates in the circumferential direction C together with the rotation of the third magnet 14 in the circumferential direction C. Since the second shaft 17 is fixed to the fourth magnet 15, the second shaft 17 rotates in the circumferential direction C together with the rotation of the fourth magnet 15 in the circumferential direction C.

The magnetic gear device 1F of the power transmission device 100F according to the present modified example has the following configuration. The magnetic gear device 1F includes a ring-shaped first magnet 11 including a plurality of first magnetic poles 111 disposed in the circumferential direction C, a ring-shaped second magnet 12 including a plurality of second magnetic poles 121 disposed in the circumferential direction C, a first pole piece 13 located between the first magnet 11 and the second magnet 12 in the radial direction R and magnetically coupling the first magnet 11 and the second magnet 12, a ring-shaped third magnet 14 including a plurality of third magnetic poles 141 disposed in the circumferential direction C, a ring-shaped fourth magnet 15 including a plurality of fourth magnetic poles 151 disposed in the circumferential direction C, and a second pole piece 16 located between the third magnet 14 and the fourth magnet 15 and magnetically coupling the third magnet 14 and the fourth magnet 15. In addition, the second magnet 12 and the third magnet 14 are coupled in the radial direction R of the power transmission device 100F according to the present modified example, the third magnet 14 rotates together with the second magnet 12, the number of the first magnetic poles 111 of the first magnet 11 is larger than the number of the second magnetic poles 121 of the second magnet 12, the number of the third magnetic poles 141 of the third magnet 14 is larger than the number of the fourth magnetic poles 151 of the fourth magnet 15, the plurality of first magnetic poles 111 of the first magnet 11 are integrally formed, and the plurality of third magnetic poles 141 of the third magnet 14 are integrally formed. Therefore, with the power transmission device 100F according to the present modified example, the speed of the second shaft 17 (output-side rotation speed) can be increased to be higher than the speed of the first shaft 22 (input-side rotation speed). Moreover, the power transmission device 100F according to the present embodiment has the same functions and effects as the power transmission device 100 according to the second embodiment.

In the power transmission device 100F according to the present modified example, the second magnet 12 and the third magnet 14 are integrally formed, and therefore it is possible to improve workability at the time of assembly by reducing the number of components as compared with a power transmission device including the second magnet 12 and the third magnet 14 separately formed.

In the power transmission device 100F according to the present modified example, the first magnet 11 is disposed at the outer side of the second magnet 12 in the radial direction R, and the third magnet 14 is disposed at the outer side of the fourth magnet 15 in the radial direction R.

Although the power transmission device 100F described above includes the second magnet 12 and the third magnet 14 integrally formed, the power transmission device 100F according to the present modified example is not limited to such a configuration. For example, the second magnet 12 and the third magnet 14 may be formed individually, a separate ring-shaped coupling part may be formed instead of the intermediate part IM2, and the second magnet 12 and the third magnet 14 may be coupled in the radial direction R with the coupling part interposed. Further, a three-stage magnetic gear device can be configured by combining the magnetic gear device 1F according to the above-described modified example and the magnetic gear device 1D with the input and the output reversed.

Further, in the magnetic gear device 1C according to the above-described modified example, the first magnet 11 is used as the input side, the first pole piece 13 is fixed, the second pole piece 16 is fixed, and the fourth magnet 15 is used as the output side. However, the magnetic gear device 1C according to the present modified example is not limited to such a configuration. For example, as indicated in Table 5, the input side, the output side, and the fixed members can be changed as appropriate.

### [Table 5]

**(Table 5)**

| First modified example of third embodiment | | | | | | | | | | | |
|---|---|---|---|---|---|---|---|---|---|---|---|
| | | | | Used as speed reducer | | | | Used as speed increaser | | | |
| | | | | First modified example of second embodiment | Another example | Another example | Another example | Another example | Another example | Another example | Another example |
| First stage (high-speed side) | Outer side | First ring magnet | 11 | Input side | Fixed | Input side | Fixed | Output side | Fixed | Output side | Fixed |
| | PP | First pole piece | 13 | Fixed | Input side | Fixed | Input side | Fixed | Output side | Fixed | Output side |
| | Inner side | Second ring magnet | 12 | Intermediate rotation part | Intermediate rotation part | Intermediate rotation part | Intermediate rotation part | Intermediate rotation part | Intermediate rotation part | Intermediate rotation part | Intermediate rotation part |
| Second stage (low-speed side) | Outer side | Third ring magnet | 14 | | | | | | | | |
| | PP | Second pole piece | 16 | Fixed | Fixed | Output side | Output side | Fixed | Input side | Input side | Input side |
| | Inner side | Fourth ring magnet | 15 | Output side | Output side | Fixed | Fixed | Input side | Output side | Fixed | Fixed |

| | |
|---|---|
| * When the number of magnets of multipole magnet (14) is less than the number of poles of PP (16) | * When the number of magnets of multipole magnet (14) is less than the number of poles of PP (16) |

### Fourth Embodiment

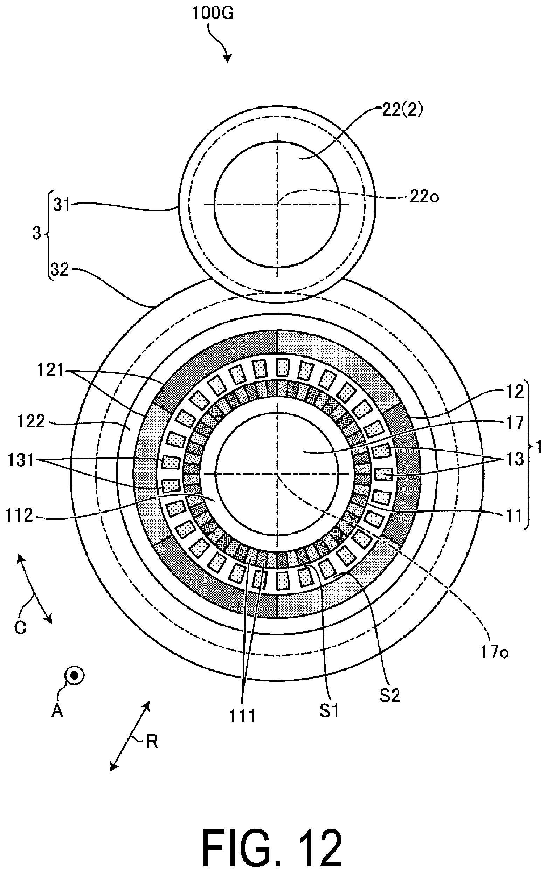

Next, a power transmission device 100G according to a fourth embodiment will be described with reference to FIG. 12. FIG. 12 is a plan view of a power transmission device 100G according to a fourth embodiment. Note that in the configuration of the power transmission device 100G according to the fourth embodiment, the same components as the components of the power transmission device 100 according to the first embodiment are denoted by the same reference numerals and the description of such components is omitted.

The power transmission device 100G according to the present embodiment includes a magnetic gear device 1, a motor 2, and an intermediate transmission mechanism 3. In the power transmission device 100G according to the present embodiment, an axis 22o of the first shaft 22 as the input shaft and an axis 17o of the second shaft 17 as the output shaft are disposed in parallel to each other. In other words, the power transmission device 100G according to the present embodiment is a parallel-axis device having the axis 22o of the input shaft and the axis 17o of the output shaft disposed in parallel.

As described above, in the power transmission device 100G according to the present embodiment, the axis 22o of the first shaft 22 as the input shaft and the axis 17o of the second shaft 17 as the output shaft are disposed in parallel to each other. Therefore, the power transmission device 100G according to the present embodiment can be easily modularized, and the flexibility of layout can be improved.

The power transmission device 100G described above includes a magnetic gear device 1, a motor 2, and an intermediate transmission mechanism 3. However, the power transmission device 100G according to the present embodiment is not limited to such a configuration. For example, the intermediate transmission mechanism 3 may be changed as appropriate, and any one of the magnetic gear devices 1A, 1B, 1C, 1D, 1E, and 1F may be applied instead of the magnetic gear device 1.

### Fifth Embodiment

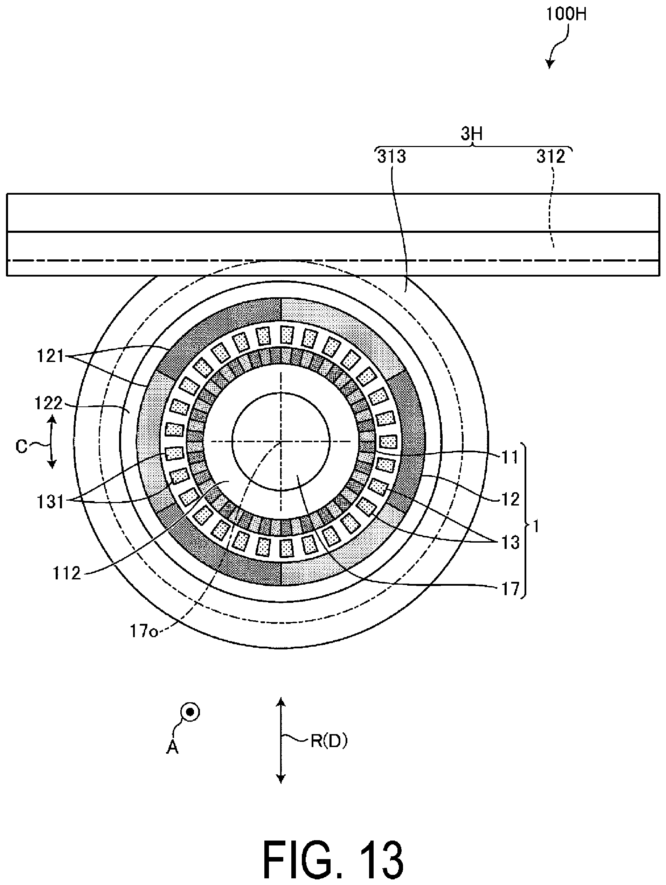

Next, a power transmission device 100H according to a fifth embodiment will be described with reference to FIG. 13. FIG. 13 is a cross-sectional view of a power transmission device 100H according to a fifth embodiment. Note that in the configuration of the power transmission device 100H according to the fifth embodiment, the same components as the components of the power transmission device 100 according to the first embodiment are denoted by the same reference numerals and the description of such components is omitted.

As illustrated in FIG. 13, the power transmission device 100H according to the present embodiment includes a magnetic gear device 1, a motor 2 (not illustrated), and a transmission mechanism 3H. In the power transmission device 100H according to the present embodiment, the motor 2 is coupled to an axis 17o as the input shaft, and is disposed orthogonally to an output shaft of the transmission mechanism 3H. In other words, the power transmission device 100H according to the present embodiment is an orthogonal-axis device having the axis 17o of the input shaft and the output shaft of the transmission mechanism 3H disposed orthogonally to each other.

The transmission mechanism 3H includes a pinion gear 313 and a rack gear 312. The pinion gear 313 is formed in a cylindrical shape, for example, and has a plurality of tooth parts. Further, the inner peripheral surface of the pinion gear 313 is fixed to the outer peripheral surface of the second back yoke 122.

The rack gear 312 extends, for example, orthogonally to an extending direction of the axis 17o. The rack gear 312 has a plurality of tooth parts. In the transmission mechanism 3H, the tooth parts of the rack gear 312 and the tooth parts of the pinion gear 311 mesh with each other.

An output shaft (not illustrated) of the motor is fixed to the axis 17o. Therefore, when the motor of the power transmission mechanism 1H is driven, the first magnet 11 is driven, thus causing the second magnet 12 to rotate in the circumferential direction C with the first pole piece 13 interposed. Accordingly, the pinion gear 313 rotates in the circumferential direction C together with the second magnet 12 and the second back yoke 122. Accordingly, the rack gear 312 meshing with the tooth parts of the pinion gear 313 moves in a direction orthogonal to the axial direction A and the radial direction R. The direction of movement of the rack gear 312 at this time is the direction of an output shaft of the power transmission mechanism 1H. In other words, the rack gear 312 serves as the output shaft of the transmission mechanism 3H. In the present embodiment, the magnetic gear device 1 serves as an intermediate transmission mechanism.

The power transmission device 100H described above includes the magnetic gear device 1, the motor 2, and the transmission mechanism 3H. However, the power transmission device 100H according to the present embodiment is not limited to such a configuration. For example, the transmission mechanism 3H may be changed as appropriate, and any one of the magnetic gear devices 1A, 1B, 1C, 1D, 1E, and 1F may be applied instead of the magnetic gear device 1.

### Sixth Embodiment

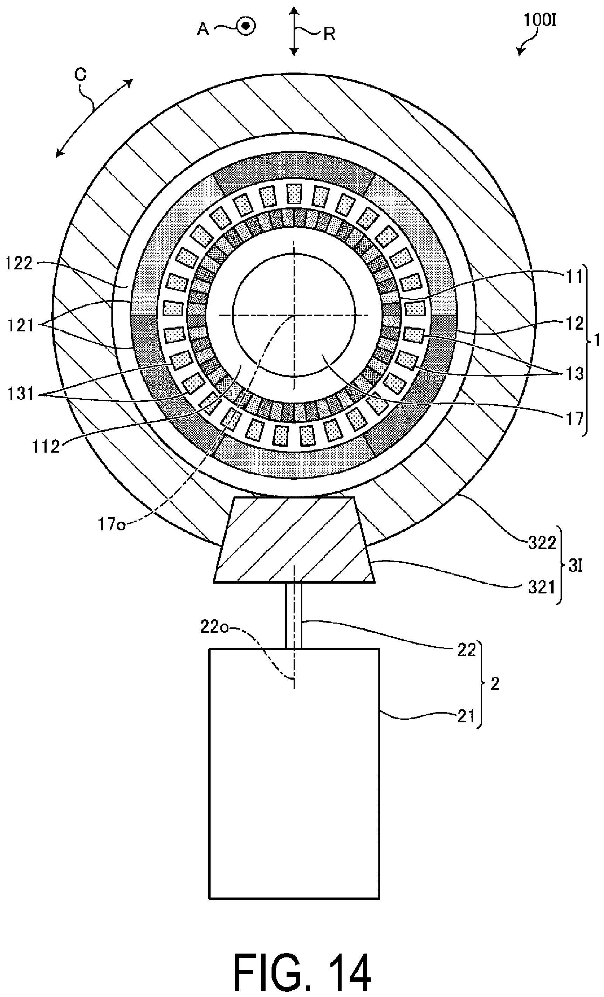

Next, a power transmission device 100I according to a sixth embodiment will be described with reference to FIG. 14. FIG. 14 is a cross-sectional view of a power transmission device 100I according to a sixth embodiment. Note that in the configuration of the power transmission device 100I according to the sixth embodiment, the same components as the components of the power transmission device 100 according to the first embodiment are denoted by the same reference numerals and the description of such components is omitted.

The power transmission device 100I according to the present embodiment includes a magnetic gear device 1, a motor 2, and an intermediate transmission mechanism 3I. In the power transmission device 100I according to the present embodiment, an axis 22o of the first shaft 22 as the input shaft and an axis 17o of the second shaft 17 as the output shaft are disposed orthogonally to each other. In other words, the power transmission device 100I according to the present embodiment is an orthogonal-axis device having the axis 22o of the input shaft and the axis 17o of the output shaft orthogonal to each other.

The intermediate transmission mechanism 3I includes a first bevel gear 321 and a second bevel gear 322. The first bevel gear 321 is fixed to the first shaft 22 and has a plurality of tooth parts.

The second bevel gear 322 has a plurality of tooth parts. The second bevel gear 322 is fixed to the outer peripheral surface of the second back yoke 122 of the second magnet 12 in the radial direction R. In the intermediate transmission mechanism 3I, the tooth parts of the first bevel gear 321 and the tooth parts of the second bevel gear 322 mesh with each other.

The power transmission device 100I described above includes a magnetic gear device 1, a motor 2, and an intermediate transmission mechanism 3. However, the power transmission device 100I according to the present embodiment is not limited to such a configuration. For example, the intermediate transmission mechanism 3 may be changed as appropriate, and any one of the magnetic gear devices 1A, 1B, 1C, 1D, 1E, and 1F may be applied instead of the magnetic gear device 1.

### Seventh Embodiment

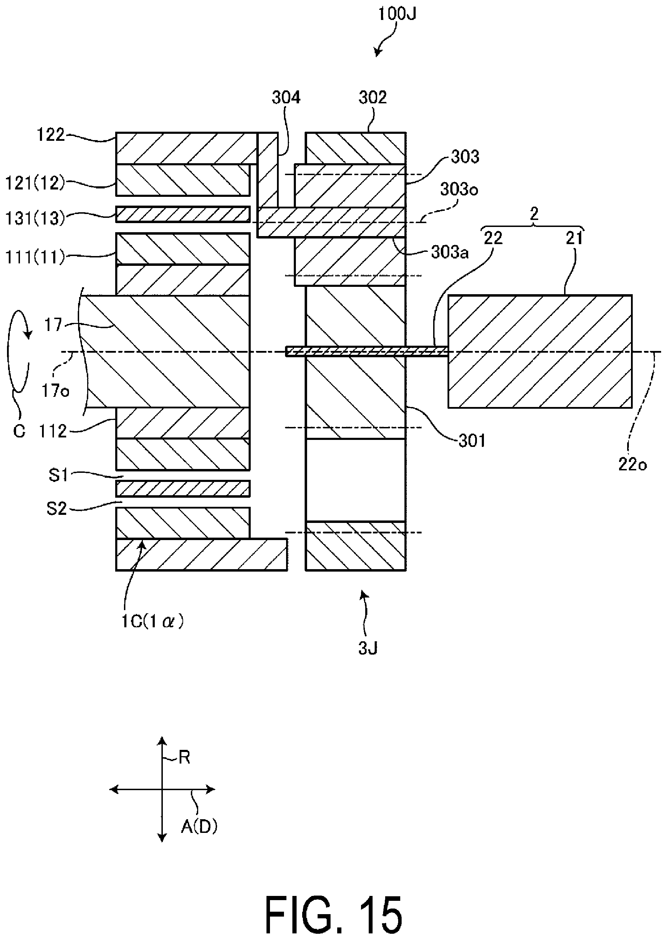

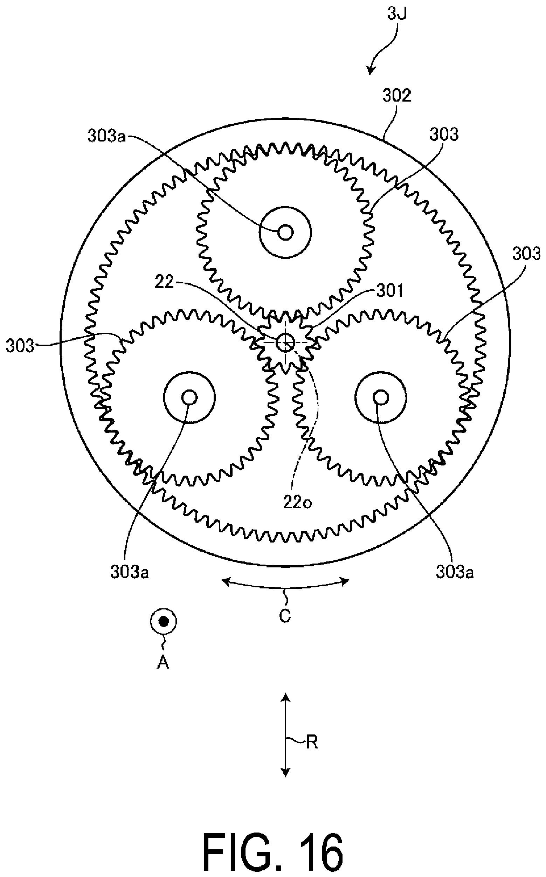

Next, a power transmission device 100J according to a seventh embodiment will be described with reference to FIGS. 15 and 16. FIG. 15 is a cross-sectional view of a power transmission device 100J according to a seventh embodiment. FIG. 16 is a front view of an intermediate transmission mechanism 3J included in the power transmission device 100J illustrated in FIG. 15. Note that in the configuration of the power transmission device 100J according to the seventh embodiment, the same components as the components of the power transmission device 100C according to the second embodiment are denoted by the same reference numerals and the description of such components is omitted.

The power transmission device 100J according to the present embodiment includes a magnetic gear device 1C, a motor 2, and an intermediate transmission mechanism 3J. In the power transmission device 100J according to the present embodiment, an axis 22o of the first shaft 22 as the input shaft and an axis 17o of the second shaft 17 as the output shaft are disposed coaxially with each other. In other words, the power transmission device 100J according to the present embodiment is a device including the axis 22o of the input shaft and the axis 17o of the output shaft disposed coaxially.

The intermediate transmission mechanism 3J described in the present embodiment is a planetary gear mechanism. The intermediate transmission mechanism 3J as a planetary gear mechanism includes a sun gear 301, a ring gear 302, a plurality of (three in the present embodiment) planetary gears 303, and a planetary carrier 304.

The sun gear 301 is formed in, for example, a circular column shape, and has tooth parts on the outer peripheral surface. The tooth parts of the sun gear 301 mesh with the tooth parts of the planetary gears 303. The sun gear 301 is fixed to the outer peripheral surface of the first shaft 22 of the motor 2.

The ring gear 302 is formed in an annular shape and has tooth parts on the inner peripheral surface. The ring gear 302 is fixed to a frame (not illustrated). That is, the intermediate transmission mechanism 3J according to the present embodiment is of a planetary type including the ring gear 302 fixed to the frame, the sun gear 301 not fixed, and the planetary carrier 304 not fixed.

Each of the planetary gears 303 is formed in, for example, a circular column shape, and has tooth parts formed on the outer peripheral surface and a planetary shaft 303a. The planetary gears 303 are provided in the intermediate transmission mechanism 3J so as to be rotatable about axes 303o of planetary shafts 303a. The tooth parts of the planetary gears 303 mesh with the tooth parts of the ring gear 302 and the tooth parts of the sun gear 301.

The planetary carrier 304 is coupled to the respective planetary shafts 303a of the planetary gears 303. The planetary carrier 304 is provided in the intermediate transmission mechanism 3J so as to be rotatable about the axis 22o along with the revolution of the planetary gears 303. Moreover, in the intermediate transmission mechanism 3J according to the present embodiment, the planetary carrier 304 is coupled to the back yoke 122 of the second magnet 12.

Next, a case where the motor 2 is driven in the power transmission device 100J according to the present embodiment will be described. In the power transmission device 100J, when the motor 2 is driven, the sun gear 301 rotates about the axis 22o together with the rotation of the first shaft 22.

The plurality of planetary gears 303 are caused to rotate about the axes 303o of the planetary shafts 303a and revolve around the sun gear 301, while meshing with the ring gear 302, by the rotation of the sun gear 301. When the planetary gears 303 revolve, the planetary carrier 304 rotates about the axis 22o along with the revolution of the planetary gears 303, since the planetary shafts 303a are coupled to the planetary carrier 304.

Further, since the planetary carrier 304 is coupled to the second back yoke 122 of the second magnet 12, the second magnet 12 rotates about the axis 17o together with the rotation of the planetary carrier 304 about the axis 22o. Therefore, as in the power transmission device 100 according to the first embodiment, the first magnet 11, the third magnet 14, the fourth magnet 15, and the second shaft 17 rotate together with the rotation of the second magnet 12.

As described above, in the power transmission device 100J according to the present embodiment, the axis 22o of the first shaft 22 as the input shaft and the axis 17o of the second shaft 17 as the output shaft are disposed coaxially. Therefore, the power transmission device 100J according to the present embodiment can be easily modularized, and the flexibility of layout can be improved. In addition, the power transmission device 100J can increase torque with the intermediate transmission mechanism 3J as a planetary gear mechanism. Therefore, when the intermediate transmission mechanism 3J is combined with a magnetic gear mechanism for increasing torque, the torque can be further increased.

The power transmission device 100J described above includes the magnetic gear device 1C, the motor 2, and the intermediate transmission mechanism 3J. However, the power transmission device 100J according to the present embodiment is not limited to such a configuration. For example, any one of the magnetic gear devices 1, 1A, 1B, 1D, 1E, and 1F may be applied instead of the magnetic gear device 1C.

### First Modified Example of Seventh Embodiment

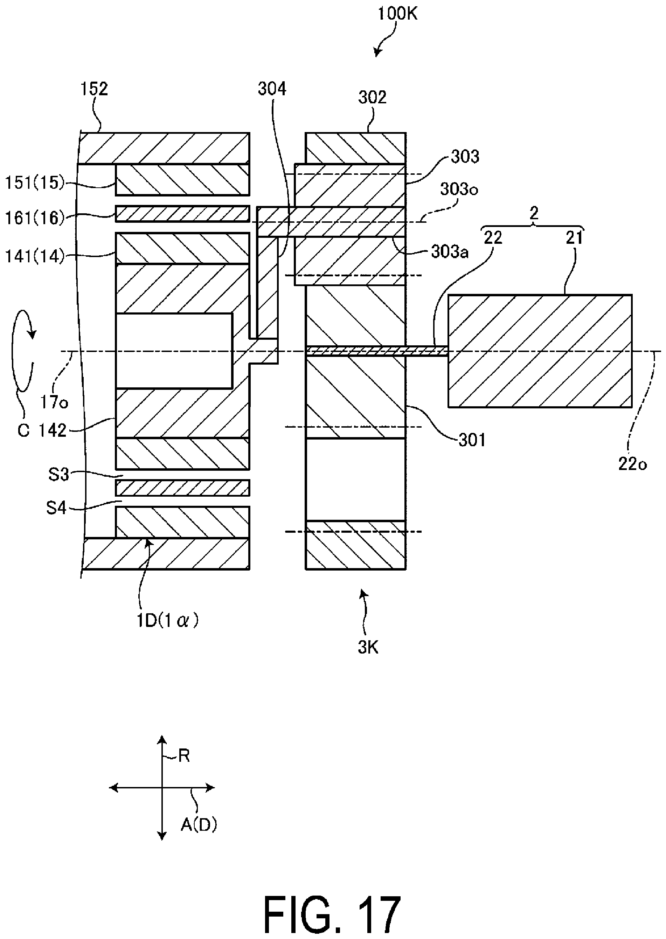

Next, a power transmission device 100K according to a first modified example of the seventh embodiment will be described with reference to FIG. 17. FIG. 17 is a cross-sectional view of a power transmission device 100K according to a first modified example of the seventh embodiment. Note that in the configuration of the power transmission device 100K according to the first modified example of the seventh embodiment, the same components as the components of the power transmission devices 100, 100D, and 100J described above are denoted by the same reference numerals and the description of such components is omitted. FIG. 17 illustrates a part of the first magnetic gear mechanism 1α in the magnetic gear device 1D connected to an intermediate transmission mechanism 3K.

The power transmission device 100K according to the present modified example includes a first magnetic gear mechanism 1α of the magnetic gear device 1D, a motor 2, and an intermediate transmission mechanism 3K.

The intermediate transmission mechanism 3K described in the present embodiment is a planetary gear mechanism. The intermediate transmission mechanism 3K as a planetary gear mechanism includes a sun gear 301, a ring gear 302, a plurality of planetary gears 303, and a planetary carrier 304.

In the intermediate transmission mechanism 3K according to the present modified example, the planetary carrier 304 is coupled to the second back yoke 122.

Next, a case where the motor 2 is driven in the power transmission device 100K according to the present embodiment will be described. In the power transmission device 100K, when the motor 2 is driven, the sun gear 301 rotates about the axis 22o together with the rotation of the first shaft 22.

The plurality of planetary gears 303 are caused to rotate about the axes 303o of the planetary shafts 303a and revolve around the sun gear 301, while meshing with the ring gear 302, by the rotation of the sun gear 301. When the planetary gears 303 revolve, the planetary carrier 304 rotates about the axis 22o along with the revolution of the planetary gears 303, since the planetary shafts 303a are coupled to the planetary carrier 304.

Further, since the planetary carrier 304 is coupled to the second back yoke 122 of the magnetic gear device 1D, the planetary carrier 304 rotates about the axis 22o, and the second back yoke 122 and the second magnet 12 rotate about the axis 17o. Therefore, as in the power transmission device 100D according to the first modified example of the second embodiment, the first magnet 11, the third magnet 14, the fourth magnet 15, and the second shaft 17 rotate together with the rotation of the second magnet 12.

As described above, in the power transmission device 100K according to the present modified example, the axis 22o of the first shaft 22 as the input shaft and the axis 17o of the second shaft 17 as the output shaft are disposed coaxially. Therefore, the power transmission device 100K according to the present embodiment can be easily modularized, and the flexibility of layout can be improved. In addition, the power transmission device 100K can increase torque with the intermediate transmission mechanism 3K as a planetary gear mechanism. Therefore, when the intermediate transmission mechanism 3K is combined with the magnetic gear mechanism 1α capable of increasing torque, the torque can be further increased.

The power transmission device 100K described above includes the magnetic gear device 1D, the motor 2, and the intermediate transmission mechanism 3K. However, the power transmission device 100K according to the present embodiment is not limited to such a configuration. For example, any one of the magnetic gear devices 1, 1A, 1B, 1C, 1E, and 1F may be applied instead of the magnetic gear device 1D.

### Second Modified Example of Seventh Embodiment

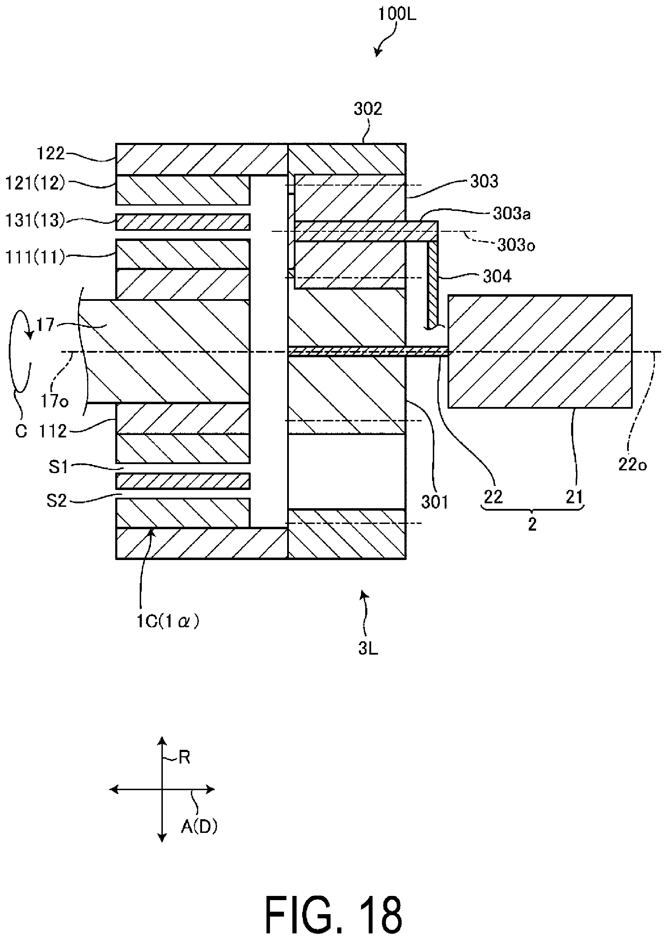

Next, a power transmission device 100L according to a second modified example of the seventh embodiment will be described with reference to FIG. 18. FIG. 18 is a cross-sectional view of a power transmission device 100L according to a second modified example of the seventh embodiment. Note that in the configuration of the power transmission device 100L according to the second modified example of the seventh embodiment, the same components as the components of the power transmission devices 100 and 100J described above are denoted by the same reference numerals and the description of such components is omitted.

The power transmission device 100L according to the present modified example includes a magnetic gear device 1C, a motor 2, and an intermediate transmission mechanism 3L.

The intermediate transmission mechanism 3L described in the present embodiment is a planetary gear mechanism. The intermediate transmission mechanism 3L as a planetary gear mechanism includes a sun gear 301, a ring gear 302, a plurality of planetary gears 303, and a planetary carrier 304.

In the intermediate transmission mechanism 3L according to the present modified example, the planetary carrier 304 is fixed to a frame (not illustrated). The ring gear 302 is coupled to the back yoke 122 of the second magnet 12. The intermediate transmission mechanism 3L according to the present embodiment is of a star type including the planetary carrier 304 fixed to the frame, the sun gear 301 not fixed, and the ring gear 302 not fixed.

Next, a case where the motor 2 is driven in the power transmission device 100L according to the present embodiment will be described. In the power transmission device 100L, when the motor 2 is driven, the sun gear 301 rotates about the axis 22o together with the rotation of the first shaft 22.

The plurality of planetary gears 303 are caused to rotate about the axes 303o of the planetary shafts 303a, while meshing with the ring gear 302, by the rotation of the sun gear 301. When the planetary gears 303 rotate, the ring gear 302 rotates about the axis 22o along with the rotation of the planetary gears 303, since the planetary carrier 304 is coupled to the frame.

Further, since the ring gear 302 is coupled to the second back yoke 122 of the magnetic gear device 1C, the second magnet 12 rotates about the axis 17o together with the rotation of the ring gear 302 about the axis 22o. Therefore, as in the power transmission device 100 according to the first embodiment, the first magnet 11, the third magnet 14, the fourth magnet 15, and the second shaft 17 rotate together with the rotation of the second magnet 12.

As described above, in the power transmission device 100L according to the present embodiment, the axis 22o of the first shaft 22 as the input shaft and the axis 17o of the second shaft 17 as the output shaft are disposed coaxially. Therefore, the power transmission device 100L according to the present embodiment can be easily modularized, and the flexibility of layout can be improved. In addition, the power transmission device 100L can increase torque also with the intermediate transmission mechanism 3L as a planetary gear mechanism, and thus can further increase torque.

The power transmission device 100L described above includes the magnetic gear device 1C, the motor 2, and the intermediate transmission mechanism 3L. However, the power transmission device 100L according to the present embodiment is not limited to such a configuration. For example, any one of the magnetic gear devices 1, 1A, 1B, 1D, 1E, and 1F may be applied instead of the magnetic gear device 1C.

### Third Modified Example of Seventh Embodiment

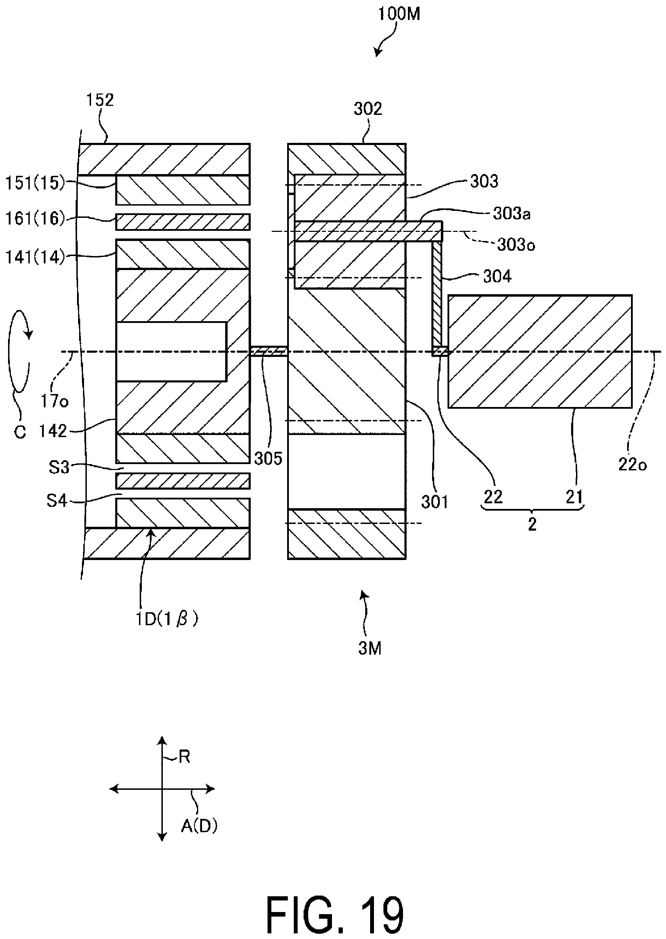

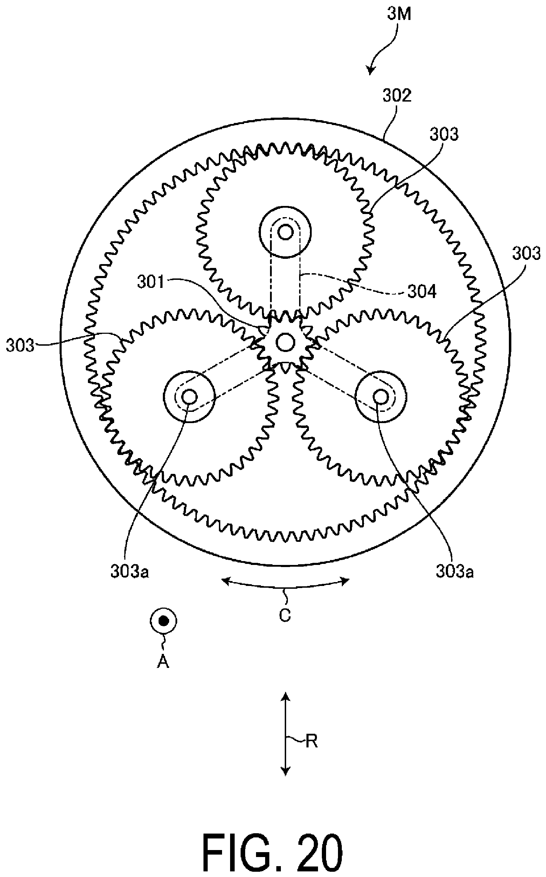

Next, a power transmission device 100M according to a third modified example of the seventh embodiment will be described with reference to FIGS. 19 and 20. FIG. 19 is a cross-sectional view of a power transmission device 100M according to a third modified example of the seventh embodiment. FIG. 20 is a front view of an intermediate transmission mechanism 3M included in the power transmission device 100M illustrated in FIG. 19. Note that in the configuration of the power transmission device 100M according to the third modified example of the seventh embodiment, the same components as the components of the power transmission devices 100, 100D, and 100J described above are denoted by the same reference numerals and the description of such components is omitted. FIG. 19 illustrates a part of the second magnetic gear mechanism 1β in the magnetic gear device 1D connected to an intermediate transmission mechanism 3M.

The power transmission device 100M according to the present modified example includes a second magnetic gear mechanism 1β of the magnetic gear device 1D, a motor 2, and an intermediate transmission mechanism 3M.

The intermediate transmission mechanism 3M described in the present embodiment is a planetary gear mechanism. The intermediate transmission mechanism 3M as a planetary gear mechanism includes a sun gear 301, a ring gear 302, a plurality of planetary gears 303, and a planetary carrier 304.

In the intermediate transmission mechanism 3M according to the present modified example, the first shaft 22 is coupled to the planetary carrier 304. The sun gear 301 is coupled to the second shaft 17 via a shaft 305. The ring gear 302 is fixed to a frame (not illustrated).

Next, a case where the motor 2 is driven in the power transmission device 100M according to the present embodiment will be described. In the power transmission device 100M, when the motor 2 is driven, the planetary carrier 304 rotates about the axis 22o.

The plurality of planetary gears 303 are caused to rotate about the axes 303o of the planetary shafts 303a and revolve around the sun gear 301, while meshing with the ring gear 302, by the rotation of the planetary carrier 304. When the planetary gears 303 revolve, the sun gear 301 rotates about the axis 22o. Since the sun gear 301 according to the present modified example is coupled to the second shaft 17 via the shaft 305, the third back yoke 142 rotates about the axis 17o along with the rotation of the sun gear 301.

Therefore, the third magnet 14 rotates together with the rotation of the sun gear 301, and the fourth magnet 15 rotates by the rotation of the third magnet 14.

As described above, in the power transmission device 100M according to the present modified example, the axis 22o of the first shaft 22 as the input shaft and the axis 17o of the second shaft 17 as the output shaft are disposed coaxially. Therefore, the power transmission device 100M according to the present embodiment can be easily modularized, and the flexibility of layout can be improved. In addition, the power transmission device 100M can increase the speed with the intermediate transmission mechanism 3M as a planetary gear mechanism. Therefore, when the magnetic gear mechanism 1β for increasing the speed is coupled to the power transmission device 100M, the speed can be further increased.

The power transmission device 100M described above includes the magnetic gear device 1D, the motor 2, and the intermediate transmission mechanism 3M. However, the power transmission device 100M according to the present embodiment is not limited to such a configuration. For example, any one of the magnetic gear devices 1, 1A, 1B, 1C, 1E, and 1F may be applied instead of the magnetic gear device 1D.

The intermediate transmission mechanisms 3J, 3K, and 3M according to the seventh embodiment and the modified examples are of a planetary type including the ring gear 302 fixed to the frame, the sun gear 301 not fixed, and the planetary carrier 304 not fixed, and the intermediate transmission mechanism 3L is a planetary gear mechanism of a star type including the planetary carrier 304 fixed, the sun gear 301 not fixed, and the ring gear 302 not fixed. However, the intermediate transmission mechanisms 3J, 3K, 3L, and 3M according to the present embodiment and the present modified examples are not limited to such configurations. For example, the intermediate transmission mechanism can be applied to a planetary gear mechanism of a solar type including the sun gear 301 fixed, the ring gear 302 not fixed, and the planetary carrier 304 not fixed.

Although the description has been given based on the embodiments and the modified examples of the power transmission devices 100, 100C, 100D, 100E, 100F, 100G, 100H, 100I, 100J, 100K, 100L, and 100M according to the present invention, the present invention is not limited to the embodiments and the modified examples, and it goes without saying that various modifications can be made without departing from the gist of the present invention. Configurations obtained by appropriately combining the constituent elements of each embodiment described above and the constituent elements of each modified example described above are also included in the present invention. Various modifications not deviating from the gist of the present invention are also included within the technical scope of the present invention, and this will be clear to those skilled in the art from the description of the claims.

### Reference Signs List

11 First magnet, 111 First magnetic pole, 12 Second magnet, 121 Second magnetic pole, 13 First pole piece, 14 Third magnet, 141 Third magnetic pole, 15 Fourth magnet, 151 Fourth magnetic pole, 16 Second pole piece, 100, 100C, 100D, 100E, 100F, 100G, 100H, 100I, 100J, 100K, 100L, 100M Power transmission device, A Axial direction, C Circumferential direction, R Radial direction

## Claims

1. A power transmission device comprising:
a magnetic gear device; and
a mechanical gear device connected to the magnetic gear device, wherein
the magnetic gear device is a harmonic type magnetic gear device.

2. The power transmission device according to claim 1, wherein
an input-side device is connected to either the magnetic gear device or the mechanical gear device.

3. The power transmission device according to claim 1, wherein
an output-side device is connected to either the magnetic gear device or the mechanical gear device.

4. The power transmission device according to claim 1, wherein
the magnetic gear device includes at least
a first magnet including a plurality of first magnetic poles disposed in a circumferential direction,
a second magnet including a plurality of second magnetic poles disposed in the circumferential direction, and
a pole piece located between the first magnet and the second magnet and magnetically coupling the first magnet and the second magnet, and
at least one of the first magnet and the second magnet has a ring shape.
